# EUROPEAN PATENT APPLICATION

(11) **EP 4 838 998 A1**
(43) Date of publication of application: **11.11.2026**
(21) Application number: 25751467.9
(22) Date of filing: 05.02.2025
(51) Int. Cl.: H04W 74/0833

(54) **METHOD AND DEVICE USED IN NODE FOR WIRELESS COMMUNICATION**

(30) Priority: 06.02.2024 CN 202410172173
(71) Applicant: Honor Device Co., Ltd., Shenzhen, Guangdong 518040 (CN)
(72) Inventor: LIU, Zheng, Shenzhen, Guangdong 518040 (CN); JIANG, Qi, Shenzhen, Guangdong 518040 (CN); ZHANG, Xiaobo, Shenzhen, Guangdong 518040 (CN)
(74) Representative: Isarpatent
(86) International application number: PCT/CN2025/075685
(87) International publication number: WO 2025/167867

(57) **Abstract**

This application discloses a method and an apparatus in a node used for wireless communication. The node receives a first information block, where the first information block indicates a plurality of PRACH occasions. The node receives a second information block, where the second information block indicates a target subband and at least one full-duplex symbol. A first PRACH occasion is one of the plurality of PRACH occasions indicated by the first information block, and the first PRACH occasion overlaps in time domain with the at least one full-duplex symbol indicated by the second information block. A synchronization broadcast signal is mapped to a valid PRACH occasion in the plurality of PRACH occasions, and validity of the first PRACH occasion depends on a relationship between the first PRACH occasion and the target subband in frequency domain. According to this application, a random access capacity is increased.

## Description

This application claims priority to Chinese Patent Application No. 202410172173.5, filed with the China National Intellectual Property Administration on February 06, 2024 and entitled "METHOD AND APPARATUS IN NODE USED FOR WIRELESS COMMUNICATION", which is incorporated herein by reference in its entirety.

### TECHNICAL FIELD

This application relates to a transmission method and apparatus in a wireless communication system, and in particular, to a transmission solution and apparatus with a flexible transmission direction configuration in wireless communication.

### BACKGROUND

Application scenarios of future wireless communication systems are becoming increasingly diversified, and different application scenarios pose different performance requirements for the systems. To meet the different performance requirements of a plurality of application scenarios, at 3GPP (3rd Generation Partner Project, 3rd Generation Partner Project) RAN (Radio Access Network, radio access network) plenary meeting #72, it was decided to conduct research on the new radio (NR, New Radio) technology (or 5G). At 3GPP RAN plenary meeting #75, the WI (Work Item, work item) for the new radio (NR, New Radio) technology was approved, and standardization work for NR began. At 3GPP RAN plenary meeting #86, it was decided to start work of the SI (Study Item, study item) and the WI (Work Item, work item) for NR Rel-17, and at 3GPP RAN plenary meeting #94e, projects of the SI and WI for NR Rel-18 were initiated. At 3GPP RAN plenary meeting #102, it was decided to start work of the SI and WI for NR Rel-19.

NR Rel-19 includes the WI that supports subband non-overlapping full duplex (SBFD, Subband non-overlapping Full Duplex). Subband non-overlapping full duplex is also one of potential technologies supported by 6G.

### SUMMARY

In an existing NR system, spectrum resources are statically classified into an FDD spectrum and a TDD spectrum. For the TDD spectrum, both a base station and user equipment operate in a half-duplex mode. Such a half-duplex mode avoids self-interference and can mitigate impact of cross-link (Cross Link) interference, but leads to a decrease in resource utilization and an increase in a delay. To resolve these problems, supporting a flexible duplex mode on the TDD spectrum or the FDD spectrum has become a possible solution.

To resolve a problem of a random access configuration in supporting the flexible duplex mode, this application discloses a solution. It should be noted that in description of this application, the flexible duplex mode is only used as a typical application scenario or example. This application is also applicable to a 6G network or another scenario facing a similar problem (for example, a scenario in which a link direction changes, or another scenario supporting multi-level configuration of transmission directions, or a base station or user equipment with a stronger capability, such as a scenario supporting in-band full duplex, or for different application scenarios, such as eMBB, URLLC, a non-terrestrial network, an integrated sensing and communication network, an intelligent metasurface, and a terahertz network, a similar technical effect can also be achieved). In addition, using a unified solution for different scenarios (including but not limited to scenarios of the eMBB, the URLLC, the non-terrestrial network, the integrated sensing and communication network, the intelligent metasurface, and the terahertz network) or different application parameters further helps reduce hardware complexity and costs. In a case of no conflict, an embodiment in a device used for a first node in this application and a feature in the embodiment may be applied to a device used for a second node in this application, and vice versa.

This application discloses a method in a first node used for wireless communication, including:
receiving a first information block, where the first information block indicates a plurality of PRACH occasions;
receiving a second information block, where the second information block indicates a target subband and at least one full-duplex symbol, where
a first PRACH occasion is one of the plurality of PRACH occasions indicated by the first information block, and the first PRACH occasion overlaps in time domain with the at least one full-duplex symbol indicated by the second information block; and a synchronization broadcast signal is mapped to a valid PRACH occasion in the plurality of PRACH occasions, and validity of the first PRACH occasion depends on a relationship between the first PRACH occasion and the target subband in frequency domain.

In an embodiment, a definition of a valid PRACH (Physical Random Access Channel, physical random access channel) occasion (Occasion) is reused to implement configuration of a PRACH occasion in a full-duplex time domain symbol, thereby simplifying a design while ensuring backward compatibility.

In an embodiment, validity of a PRACH occasion is judged depending on a relationship between the PRACH occasion and a target subband, thereby ensuring effective mapping between a PRACH occasion and a synchronization broadcast signal, while ensuring transmission performance of a PRACH.

According to one aspect of this application, the foregoing method is characterized in that the validity of the first PRACH occasion further depends on a relationship between a first threshold and an interval length between the first PRACH occasion and an adjacent non-full-duplex symbol in time domain, and the first threshold is configured or predefined and/or related to a user equipment capability.

According to one aspect of this application, the foregoing method is characterized in that the first PRACH occasion belonging to the target subband in frequency domain and a frequency domain interval between the first PRACH occasion and at least one boundary of the target subband in frequency domain being not less than a second threshold are conditions for the first PRACH occasion to be valid, and the second threshold is predefined or configured.

According to one aspect of this application, the foregoing method is characterized in that any valid PRACH occasion in the plurality of PRACH occasions is located in an uplink symbol in time domain, or is located in a full-duplex symbol in time domain, or is located in a flexible symbol in time domain.

According to one aspect of this application, the foregoing method is characterized in that the plurality of PRACH occasions belong to a reference subband in frequency domain, the target subband and the reference subband are non-orthogonal, and the first information block indicates a frequency domain interval between a start frequency domain resource occupied by the plurality of PRACH occasions and a start frequency domain resource included in the reference subband.

According to one aspect of this application, the foregoing method is characterized in that a second PRACH occasion is one of the plurality of PRACH occasions, and the second PRACH occasion is located in a flexible symbol but not in a full-duplex symbol in time domain; when the second PRACH occasion belongs to the target subband in frequency domain, the second PRACH occasion is valid; when the second PRACH occasion does not belong to the target subband in frequency domain, and the second PRACH occasion is not located before a synchronization broadcast signal belonging to a same PRACH slot in time domain, and a start of the second PRACH occasion is at least M symbols behind each of a previous downlink symbol and a previous synchronization broadcast signal, the second PRACH occasion is valid, where M is a non-negative integer related to a subcarrier spacing of a random access preamble.

According to one aspect of this application, the foregoing method is characterized in that a PRACH occasion that is in the plurality of PRACH occasions and that is located in a full-duplex symbol indicated as downlink by a TDD uplink-downlink configuration in time domain, and a PRACH occasion that is located in a symbol other than the full-duplex symbol indicated as downlink by the TDD uplink-downlink configuration are separately mapped to a synchronization broadcast signal.

This application discloses a method in a second node used for wireless communication, including:
sending a first information block, where the first information block indicates a plurality of PRACH occasions; and
sending a second information block, where the second information block indicates a target subband and at least one full-duplex symbol, where
a first PRACH occasion is one of the plurality of PRACH occasions indicated by the first information block, and the first PRACH occasion overlaps in time domain with the at least one full-duplex symbol indicated by the second information block; and a synchronization broadcast signal is mapped to a valid PRACH occasion in the plurality of PRACH occasions, and validity of the first PRACH occasion depends on a relationship between the first PRACH occasion and the target subband in frequency domain.

According to one aspect of this application, the foregoing method is characterized in that the validity of the first PRACH occasion further depends on a relationship between a first threshold and an interval length between the first PRACH occasion and an adjacent non-full-duplex symbol in time domain, and the first threshold is configured or predefined and/or related to a user equipment capability.

According to one aspect of this application, the foregoing method is characterized in that the first PRACH occasion belonging to the target subband in frequency domain and a frequency domain interval between the first PRACH occasion and at least one boundary of the target subband in frequency domain being not less than a second threshold are conditions for the first PRACH occasion to be valid, and the second threshold is predefined or configured.

According to one aspect of this application, the foregoing method is characterized in that any valid PRACH occasion in the plurality of PRACH occasions is located in an uplink symbol in time domain, or is located in a full-duplex symbol in time domain, or is located in a flexible symbol in time domain.

According to one aspect of this application, the foregoing method is characterized in that the plurality of PRACH occasions belong to a reference subband in frequency domain, the target subband and the reference subband are non-orthogonal, and the first information block indicates a frequency domain interval between a start frequency domain resource occupied by the plurality of PRACH occasions and a start frequency domain resource included in the reference subband.

According to one aspect of this application, the foregoing method is characterized in that a second PRACH occasion is one of the plurality of PRACH occasions, and the second PRACH occasion is located in a flexible symbol but not in a full-duplex symbol in time domain; when the second PRACH occasion belongs to the target subband in frequency domain, the second PRACH occasion is valid; when the second PRACH occasion does not belong to the target subband in frequency domain, and the second PRACH occasion is not located before a synchronization broadcast signal belonging to a same PRACH slot in time domain, and a start of the second PRACH occasion is at least M symbols behind each of a previous downlink symbol and a previous synchronization broadcast signal, the second PRACH occasion is valid, where M is a non-negative integer related to a subcarrier spacing of a random access preamble.

According to one aspect of this application, the foregoing method is characterized in that a PRACH occasion that is in the plurality of PRACH occasions and that is located in a full-duplex symbol indicated as downlink by a TDD uplink-downlink configuration in time domain, and a PRACH occasion that is located in a symbol other than the full-duplex symbol indicated as downlink by the TDD uplink-downlink configuration are separately mapped to a synchronization broadcast signal.

This application discloses a first node device used for wireless communication, including:
a first receiver, configured to receive a first information block, where the first information block indicates a plurality of PRACH occasions; and
the first receiver is configured to receive a second information block, where the second information block indicates a target subband and at least one full-duplex symbol, where
a first PRACH occasion is one of the plurality of PRACH occasions indicated by the first information block, and the first PRACH occasion overlaps in time domain with the at least one full-duplex symbol indicated by the second information block; and a synchronization broadcast signal is mapped to a valid PRACH occasion in the plurality of PRACH occasions, and validity of the first PRACH occasion depends on a relationship between the first PRACH occasion and the target subband in frequency domain.

This application discloses a second node device used for wireless communication, including:
a first transmitter, configured to send a first information block, where the first information block indicates a plurality of PRACH occasions; and
the first transmitter is configured to send a second information block, where the second information block indicates a target subband and at least one full-duplex symbol, where
a first PRACH occasion is one of the plurality of PRACH occasions indicated by the first information block, and the first PRACH occasion overlaps in time domain with the at least one full-duplex symbol indicated by the second information block; and a synchronization broadcast signal is mapped to a valid PRACH occasion in the plurality of PRACH occasions, and validity of the first PRACH occasion depends on a relationship between the first PRACH occasion and the target subband in frequency domain.

### BRIEF DESCRIPTION OF DRAWINGS

Other features, objectives, and advantages of this application become clearer by reading detailed descriptions of non-limiting embodiments with reference to the following drawings:
FIG. 1 is a flowchart of a first information block and a second information block according to an embodiment of this application;
FIG. 2 is a schematic diagram of a network architecture according to an embodiment of this application;
FIG. 3 is a schematic diagram of a wireless protocol architecture of a user plane and a control plane according to an embodiment of this application;
FIG. 4 is a schematic diagram of a first node device and a second node device according to an embodiment of this application;
FIG. 5 is a flowchart of wireless signal transmission according to an embodiment of this application;
FIG. 6 is a schematic diagram of a first threshold according to an embodiment of this application;
FIG. 7 is a schematic diagram of a second threshold according to an embodiment of this application;
FIG. 8 is a schematic diagram of a plurality of PRACH occasions according to an embodiment of this application;
FIG. 9 is a schematic diagram of a relationship between a target subband and a reference subband according to an embodiment of this application;
FIG. 10 is a schematic diagram of a second PRACH occasion according to an embodiment of this application;
FIG. 11 is a schematic diagram of mapping between a plurality of PRACH occasions and a synchronization broadcast signal according to an embodiment of this application;
FIG. 12 is a structural block diagram of a processing apparatus in a first node device according to an embodiment of this application; and
FIG. 13 is a structural block diagram of a processing apparatus in a second node device according to an embodiment of this application.

### DESCRIPTION OF EMBODIMENTS

Technical solutions in this application are further described in detail below with reference to the accompanying drawings. It should be noted that, in a case of no conflict, embodiments of this application and features in the embodiments can be arbitrarily combined with each other.

### Embodiment 1

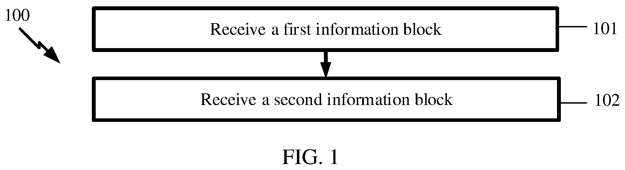

Embodiment 1 illustrates a flowchart 100 of a first information block and a second information block according to an embodiment of this application, as shown in FIG. 1. In FIG. 1, each block represents one step. It should be particularly emphasized that an order of the blocks in the figure does not limit a temporal precedence relationship between the represented steps.

In Embodiment 1, a first node device in this application receives a first information block in step 101, where the first information block indicates a plurality of PRACH occasions. The first node device in this application receives a second information block in step 102, where the second information block indicates a target subband and at least one full-duplex symbol. A first PRACH occasion is one of the plurality of PRACH occasions indicated by the first information block, and the first PRACH occasion overlaps in time domain with the at least one full-duplex symbol indicated by the second information block. A synchronization broadcast signal is mapped to a valid PRACH occasion in the plurality of PRACH occasions, and validity of the first PRACH occasion depends on a relationship between the first PRACH occasion and the target subband in frequency domain.

In an embodiment, the first information block includes higher layer information or a higher layer parameter configuration.

In an embodiment, the first information block includes one or more IEs (Information Element, information element) included in one piece of RRC (Radio Resource Control, radio resource control) layer signaling, or the first information block includes one or more fields (Field) included in one piece of RRC layer signaling. In a subsidiary embodiment of the foregoing embodiment, the first information block including RRC layer information can reduce signaling overheads.

In an embodiment, the first information block includes some or all of fields included in one SIB.

In an embodiment, the first information block is cell common (Cell Common) or the first information block is cell specific (Cell specific).

In an embodiment, the first information block is group common (Group Common).

In an embodiment, the first information block is user equipment specific (UE specific or UE dedicated).

In an embodiment, the first information block is configured per subband (per subband). In a subsidiary embodiment of the foregoing embodiment, configuring the first information block per subband can improve configuration flexibility of a PRACH occasion in a case of full duplex.

In an embodiment, the first information block is configured per carrier (per carrier). In a subsidiary embodiment of the foregoing embodiment, configuration per carrier can reduce complexity.

In an embodiment, the first information block is configured per bandwidth part (BWP, bandwidth Part) (Per BWP). In a subsidiary embodiment of the foregoing embodiment, configuration per BWP can reuse an existing design and reduce standardization work.

In an embodiment, the first information block includes some or all of fields in an IE "RACH-ConfigDedicated".

In an embodiment, the first information block includes a field "CFRA" or a field "CFRA-TwoStep-r16".

In an embodiment, the first information block includes a field "msg1-FDM" or a field "msgA-RO-FDM-r16".

In an embodiment, the first information block includes some or all of fields in an IE "rach-ConfigGeneric".

In an embodiment, the first information block includes some or all of fields in an IE "SI-RequestConfig".

In an embodiment, the first information block includes some or all of fields in an IE "RACH-ConfigCommon".

In an embodiment, the first information block includes some or all of fields in an IE "BeamFailureRecoveryConfig".

In an embodiment, the first information block includes some or all of fields in an IE "BWP-UplinkCommon".

In an embodiment, the first information block includes some or all of fields in an IE "ServingCellConfigCommon".

In an embodiment, the first information block includes some or all of fields in an IE "RACH-ConfigGenericTwoStepRA".

In an embodiment, the first information block includes some or all of fields in an IE "ServingCellConfig".

In an embodiment, the first information block includes some or all of fields in an IE "RACH-ConfigCommonTwoStepRA".

In an embodiment, the first information block includes some or all of fields in one DCI format. In a subsidiary embodiment of the foregoing embodiment, the first information block includes DCI, which can provide greater flexibility.

In an embodiment, the first information block is transmitted on a PDCCH (physical downlink control channel, physical downlink control channel).

In an embodiment, any PRACH occasion in the plurality of PRACH occasions includes allocated or configured PRACH time-frequency resources.

In an embodiment, any PRACH occasion in the plurality of PRACH occasions is a time-frequency occasion for one PRACH.

In an embodiment, any PRACH occasion in the plurality of PRACH occasions includes time-frequency resources occupied by one PRACH transmission.

In an embodiment, there are two frequency division multiplexed (FDM, frequency division multiplexed) PRACH occasions in the plurality of PRACH occasions.

In an embodiment, any two PRACH occasions in the plurality of PRACH occasions are time division multiplexed.

In an embodiment, any two PRACH occasions in the plurality of PRACH occasions include the same time domain resources.

In an embodiment, there are two PRACH occasions that include different time domain resources in the plurality of PRACH occasions.

In an embodiment, any two PRACH occasions in the plurality of PRACH occasions are for the same preamble (preamble) format (format). In a subsidiary embodiment of the foregoing embodiment, an advantage of doing so is a simple design.

In an embodiment, two PRACH occasions in the plurality of PRACH occasions are for different preamble (preamble) formats (format). In a subsidiary embodiment of the foregoing embodiment, an advantage of doing so is enhanced flexibility.

In an embodiment, the technical feature "the first information block indicates a plurality of PRACH occasions" includes: All or part of the first information block explicitly or implicitly indicates the plurality of PRACH occasions.

In an embodiment, the technical feature "the first information block indicates a plurality of PRACH occasions" includes: The first information block is used to determine the plurality of PRACH occasions.

In an embodiment, the technical feature "the first information block indicates a plurality of PRACH occasions" includes: The first information block indicates time-frequency resources included in at least one PRACH occasion in the plurality of PRACH occasions.

In an embodiment, the technical feature "the first information block indicates a plurality of PRACH occasions" includes: The first information block indicates a quantity of frequency-division PRACH occasions that are in the plurality of PRACH occasions and that are in the same time domain resource.

In an embodiment, the technical feature "the first information block indicates a plurality of PRACH occasions" includes: The first information block indicates a start frequency domain resource of a lowest PRACH occasion in frequency domain in the plurality of PRACH occasions.

In an embodiment, the technical feature "the first information block indicates a plurality of PRACH occasions" includes: The first information block indicates a PRACH configuration index (configuration index), and the PRACH configuration index indicated by the first information block configures a time domain resource of at least one PRACH occasion in the plurality of PRACH occasions.

In an embodiment, the first information block precedes the second information block.

In an embodiment, the first information block follows the second information block.

In an embodiment, the first information block and the second information block are transmitted through the same physical channel.

In an embodiment, the first information block and the second information block respectively include different IEs or fields included in the same IE.

In an embodiment, the second information block includes higher layer information or a higher layer parameter configuration.

In an embodiment, the second information block includes one or more IEs included in one piece of RRC layer signaling, or the second information block includes one or more fields included in one piece of RRC layer signaling. In a subsidiary embodiment of the foregoing embodiment, the second information block including RRC layer information can reduce signaling overheads.

In an embodiment, the second information block includes some or all of fields included in one SIB.

In an embodiment, the second information block is cell common (Cell Common) or the second information block is cell specific (Cell specific).

In an embodiment, the second information block is group common (Group Common).

In an embodiment, the second information block is user equipment specific (UE specific or UE dedicated).

In an embodiment, the second information block is configured per subband (per subband).

In an embodiment, the second information block is configured per carrier (per carrier). In a subsidiary embodiment of the foregoing embodiment, configuring SBFD per carrier reduces complexity.

In an embodiment, the second information block is configured per bandwidth part (BWP, bandwidth Part) (Per BWP). In a subsidiary embodiment of the foregoing embodiment, configuring SBFD per BWP can reuse an existing design and reduce standardization work.

In an embodiment, the second information block includes some or all of fields in an IE "SBFDConfigDedicated-r19".

In an embodiment, the second information block includes some or all of fields in an IE "SBFDConfigCommon-r19".

In an embodiment, the second information block includes some or all of fields in an IE "SBFDConfig-r19".

In an embodiment, the second information block includes some or all of fields in an IE "ServingCellConfigCommon".

In an embodiment, the second information block includes some or all of fields in an IE "CellGroupConfig".

In an embodiment, the second information block includes some or all of fields in an IE "SpCellConfig".

In an embodiment, the second information block includes some or all of fields in an IE "SCellConfig".

In an embodiment, the second information block includes some or all of fields in an IE "ServingCellConfigCommonSIB".

In an embodiment, the second information block includes some or all of fields in an IE "ServingCellConfig".

In an embodiment, the second information block includes some or all of fields in a DCI (downlink control information, downlink control information) format 2_N, where N is a non-negative integer.

In an embodiment, the second information block includes some or all of fields in a DCI format 2_10.

In an embodiment, the second information block includes some or all of fields in a DCI format. In a subsidiary embodiment of the foregoing embodiment, the second information block includes DCI, which can provide greater flexibility.

In an embodiment, the second information block is transmitted on a PDCCH (physical downlink control channel, physical downlink control channel).

In an embodiment, the second information block configures a slot or a symbol of SBFD (Subband non-overlapping Full Duplex, subband non-overlapping full duplex).

In an embodiment, the second information block configures at least one of an uplink subband (UL subband), a downlink subband (DL subband), or a guardband of SBFD.

In an embodiment, the second information block configures a slot or a symbol that supports full duplex.

In an embodiment, the target subband is a full-duplex subband (full-duplex subband).

In an embodiment, the target subband is a full-duplex subband used for uplink.

In an embodiment, the target subband is an uplink SBFD subband.

In an embodiment, the target subband is a subband that can be used for uplink transmission in a downlink symbol or a flexible symbol.

In an embodiment, the target subband includes a guard frequency domain resource (guard).

In an embodiment, the target subband does not include a guard frequency domain resource.

In an embodiment, the target subband includes consecutive frequency domain resources.

In an embodiment, one uplink BWP includes all or some of frequency domain resources in the target subband. In a subsidiary embodiment of the foregoing embodiment, the target subband belonging to the uplink BWP can maximize reuse of an existing design and reduce design complexity.

In an embodiment, one active (active) uplink BWP includes all or some of frequency domain resources in the target subband. In a subsidiary embodiment of the foregoing embodiment, the active uplink BWP including some of resources in the target subband can support carrier-level subband configuration, increasing flexibility.

In an embodiment, in a time domain symbol, there is an overlapping frequency domain resource between the target subband and the active uplink BWP.

In an embodiment, in a time domain symbol, there is no overlapping frequency domain resource between the target subband and the active uplink BWP.

In an embodiment, a boundary of an RB (resource block, Resource Block) included in the target subband is aligned with a boundary of an RB in the uplink BWP. In a subsidiary embodiment of the foregoing embodiment, uplink resource fragmentation is avoided, and coverage is improved.

In an embodiment, the target subband is per (per) numerology (numerology) or per subcarrier spacing.

In an embodiment, the target subband is per (per) resource grid (resource grid). In a subsidiary embodiment of the foregoing embodiment, configuring a subband per grid improves configuration flexibility.

In an embodiment, the target subband is per BWP. In a subsidiary embodiment of the foregoing embodiment, configuring a subband per BWP ensures compatibility and reduces standard complexity.

In an embodiment, a boundary of an RB included in the target subband is aligned with a boundary of an RB in a downlink BWP. In a subsidiary embodiment of the foregoing embodiment, downlink resource fragmentation is avoided, and scheduling flexibility is ensured.

In an embodiment, the second information block indicating a target subband includes: All or part of the second information block explicitly or implicitly indicates the target subband.

In an embodiment, the second information block indicating a target subband includes: The second information block indicates a start RB (or an RB with a lowest index) of the target subband.

In an embodiment, the second information block indicating a target subband includes: The second information block indicates a quantity of RBs included in the target subband.

In an embodiment, the second information block indicating a target subband includes: The second information block indicates an RIV (resource indicator value, resource indicator value) corresponding to the target subband.

In an embodiment, the second information block indicating a target subband includes: The second information block indicates an RIV corresponding to the target subband, where the start RB of the target subband and the quantity of consecutive RBs included in the target subband are used to generate the corresponding RIV.

In an embodiment, the second information block indicating a target subband includes: The second information block indicates an SLIV (start and length indicator value, start and length indicator value) corresponding to the target subband.

In an embodiment, the second information block indicating a target subband includes:
The second information block indicates an SLIV corresponding to the target subband, where the start RB of the target subband and the quantity of consecutive RBs included in the target subband are used to generate the corresponding SLIV.

In an embodiment, the second information block indicating a target subband includes: The second information block indicates at least one CRB (common resource block, common resource block) that is for one subcarrier spacing and that is included in the target subband.

In an embodiment, the second information block indicating a target subband includes: The second information block indicates a quantity of CRBs spaced between a CRB with a lowest index included in the target subband and a frequency point A (point A), and a quantity of consecutive CRBs included in the target subband.

In an embodiment, the second information block indicating a target subband includes: All or part of the second information block explicitly or implicitly indicates a quantity of CRBs for a reference subcarrier spacing spaced between the frequency point A (point A) and a CRB with a lowest index that is for the reference subcarrier spacing and that is included in the target subband, and a quantity of consecutive CRBs that are for the reference subcarrier spacing and that are included in the target subband. In a subsidiary embodiment of the foregoing embodiment, the reference subcarrier spacing is equal to a subcarrier spacing in one uplink resource grid (resource grid), and an advantage of doing so includes avoiding resource fragmentation. In a subsidiary embodiment of the foregoing embodiment, the reference subcarrier spacing is equal to a subcarrier spacing in one downlink resource grid (resource grid), and an advantage of doing so is to improve scheduling flexibility. In a subsidiary embodiment of the foregoing embodiment, the reference subcarrier spacing is related to a frequency range (FR). In a subsidiary embodiment of the foregoing embodiment, the reference subcarrier spacing is predefined or configured. In a subsidiary embodiment of the foregoing embodiment, the reference subcarrier spacing is a maximum value of subcarrier spacings respectively for a plurality of configured uplink resource grids, and an advantage of doing so is to ensure alignment with an uplink resource. In a subsidiary embodiment of the foregoing embodiment, the reference subcarrier spacing is a maximum value of subcarrier spacings respectively for a plurality of configured downlink resource grids, and an advantage of doing so is to ensure alignment with a downlink resource. In a subsidiary embodiment of the foregoing embodiment, the reference subcarrier spacing is a maximum value of subcarrier spacings respectively for all configured resource grids, and an advantage of doing so is to ensure alignment with both uplink and downlink resources.

In an embodiment, the second information block indicating a target subband includes: The second information block respectively indicates M1 subbands from M1 resource grids, where M1 is a positive integer greater than 1, and the target subband is one of the M1 subbands. In a subsidiary embodiment of the foregoing embodiment, the M1 resource grids are M1 uplink resource grids, and an advantage of doing so is to avoid fragmentation of uplink resources while not increasing signaling overheads. In a subsidiary embodiment of the foregoing embodiment, the M1 resource grids are M1 downlink resource grids, and an advantage of doing so is to avoid fragmentation of downlink resources while not increasing signaling overheads. In a subsidiary embodiment of the foregoing embodiment, the M1 resource grids include both uplink resource grids and downlink resource grids, and an advantage of doing so is to consider allocation of both uplink and downlink resources even though some signaling overheads are increased. In a subsidiary embodiment of the foregoing embodiment, the M1 resource grids are configured.

In an embodiment, a full-duplex symbol indicated by the second information block is a time domain symbol configured with the target subband.

In an embodiment, a full-duplex symbol is an SBFD symbol.

In an embodiment, a full-duplex symbol is an OFDM (Orthogonal Frequency Division Multiplexing, orthogonal frequency division multiplexing) symbol.

In an embodiment, a full-duplex symbol is a time domain symbol configured with SBFD.

In an embodiment, a full-duplex symbol is a time domain symbol in an SBFD slot.

In an embodiment, a full-duplex symbol is a time domain symbol configured with an SBFD subband in time domain.

In an embodiment, a full-duplex symbol is a time domain symbol that supports full duplex.

In an embodiment, a full-duplex symbol is a time domain symbol to which SBFD is applicable.

In an embodiment, a full-duplex symbol is a time domain symbol that can simultaneously perform uplink transmission and downlink transmission.

In an embodiment, a full-duplex symbol is a time domain symbol that can simultaneously perform uplink transmission and downlink transmission on a network side (or a base station side).

In an embodiment, a full-duplex symbol is a time domain symbol that can simultaneously perform uplink transmission and downlink transmission on both a network side (or a base station side) and a user equipment side.

In an embodiment, a full-duplex symbol is a time domain symbol indicated (or provided) by signaling configured with SBFD.

In an embodiment, a full-duplex symbol is a symbol indicated as downlink by "tdd-UL-DL-ConfigCommon".

In an embodiment, a full-duplex symbol is a symbol indicated as downlink or flexible by "tdd-UL-DL-ConfigCommon".

In an embodiment, both downlink and flexible symbols are considered, expanding configuration flexibility.

In an embodiment, only a downlink symbol is considered, simplifying a system design.

In an embodiment, a full-duplex symbol is a symbol that is indicated as downlink by "tdd-UL-DL-ConfigCommon" but can be used for uplink transmission.

In an embodiment, the second information block indicating at least one full-duplex symbol includes: All or part of the second information block explicitly or implicitly indicates the at least one full-duplex symbol.

In an embodiment, the second information block indicating at least one full-duplex symbol includes: The second information block indicates only one full-duplex symbol.

In an embodiment, the second information block indicating at least one full-duplex symbol includes: The second information block indicates a plurality of full-duplex symbols.

In an embodiment, the second information block indicating at least one full-duplex symbol includes: A position or an index of the at least one full-duplex symbol in time domain depends on the second information block.

In an embodiment, the second information block indicating at least one full-duplex symbol includes: The second information block indicates at least one symbol from a time window as a full-duplex symbol.

In an embodiment, the second information block indicating at least one full-duplex symbol includes: The symbol indicated (or provided) by the second information block is a full-duplex symbol.

In an embodiment, the second information block indicating at least one full-duplex symbol includes: The second information block indicates, as a full-duplex symbol, at least one downlink symbol indicated by tdd-UL-DL-ConfigCommon.

In an embodiment, the second information block indicating at least one full-duplex symbol includes: The symbol that is indicated (or provided) by the second information block and that is indicated as downlink by tdd-UL-DL-ConfigCommon is a full-duplex symbol.

In an embodiment, the second information block indicating at least one full-duplex symbol includes: The symbol that is indicated (or provided) by the second information block and that is indicated as downlink or flexible by tdd-UL-DL-ConfigCommon is a full-duplex symbol.

In an embodiment, the second information block indicating at least one full-duplex symbol includes: A symbol that overlaps in time domain with the symbol indicated (or provided) by the second information block is a full-duplex symbol.

In an embodiment, the second information block indicating at least one full-duplex symbol includes: A symbol that completely or partially overlaps in time domain with the symbol indicated (or provided) by the second information block and that is indicated as downlink by tdd-UL-DL-ConfigCommon is a full-duplex symbol.

In an embodiment, the second information block indicating at least one full-duplex symbol includes: A symbol that completely or partially overlaps in time domain with the symbol indicated (or provided) by the second information block and that is indicated as downlink or flexible by tdd-UL-DL-ConfigCommon is a full-duplex symbol.

In an embodiment, the second information block indicating at least one full-duplex symbol includes: A symbol that is indicated as downlink by tdd-UL-DL-ConfigCommon and that completely or partially overlaps in time domain with the symbol indicated (or provided) by the second information block is a full-duplex symbol.

In an embodiment, the second information block indicating at least one full-duplex symbol includes: A symbol that is indicated as downlink or flexible by tdd-UL-DL-ConfigCommon and that completely or partially overlaps in time domain with the symbol indicated (or provided) by the second information block is a full-duplex symbol.

In an embodiment, the second information block indicating at least one full-duplex symbol includes: The second information block indicates at least one symbol based on a reference subcarrier spacing, and any time domain symbol that is indicated as downlink by tdd-UL-DL-ConfigCommon and that overlaps with the symbol indicated by the second information block is a full-duplex symbol, where the reference subcarrier spacing is predefined or configured by signaling. In a subsidiary embodiment of the foregoing embodiment, the reference subcarrier spacing being predefined means that the reference subcarrier spacing is fixed. In a subsidiary embodiment of the foregoing embodiment, the reference subcarrier spacing being predefined means that the reference subcarrier spacing is related to a frequency range (FR, frequency range). In a subsidiary embodiment of the foregoing embodiment, the reference subcarrier spacing being predefined means that the reference subcarrier spacing is related to a band (band) index. In a subsidiary embodiment of the foregoing embodiment, the reference subcarrier spacing being predefined means that the reference subcarrier spacing is equal to a subcarrier spacing of an initial downlink BWP (Bandwidth Part, bandwidth part). In a subsidiary embodiment of the foregoing embodiment, the reference subcarrier spacing being predefined means that the reference subcarrier spacing is equal to a subcarrier spacing of an initial uplink BWP (Bandwidth Part, bandwidth part).

In an embodiment, the second information block indicating at least one full-duplex symbol includes: The second information block indicates at least one full-duplex symbol from a periodic time window, where the periodic time window includes a plurality of consecutive time domain symbols, and a time length of the periodic time window is related to a length of a slot format configuration period.

In an embodiment, the second information block indicating at least one full-duplex symbol includes: The second information block indicates whether at least one symbol from a time window is applicable (applicable) to or is associated (associate) with or corresponds (correspond) to or is for the target subband, where the full-duplex symbol is a symbol that is applicable to or is associated with or corresponds to or is for the target subband.

In an embodiment, the second information block indicating at least one full-duplex symbol includes: The second information block includes a bitmap (bitmap), where any bit in the bitmap corresponds to one time domain symbol in one periodic time window, and a time domain symbol that is in the periodic time window and that corresponds to a bit with a bit value equal to "1" in the bitmap is a full-duplex symbol, and a time domain symbol that is in the periodic time window and that corresponds to a bit with a bit value equal to "0" in the bitmap is a non-full-duplex symbol. In a subsidiary embodiment of the foregoing embodiment, a link direction of the time domain symbol that is in the periodic time window and that corresponds to the bit with the bit value equal to "0" in the bitmap is provided by tdd-UL-DL-ConfigCommon. In a subsidiary embodiment of the foregoing embodiment, the time domain symbol that is in the periodic time window and that corresponds to the bit with the bit value equal to "0" in the bitmap is a downlink symbol or a flexible symbol. In a subsidiary embodiment of the foregoing embodiment, any bit in the bitmap corresponds to a time domain symbol that is in the periodic time window and that is indicated as a downlink symbol or a flexible symbol by tdd-UL-DL-ConfigCommon. In a subsidiary embodiment of the foregoing embodiment, a quantity of bits included in the bitmap is equal to a quantity of time domain symbols included in the periodic time window. In a subsidiary embodiment of the foregoing embodiment, a quantity of bits included in the bitmap is equal to a quantity of time domain symbols that are included in the periodic time window and that correspond to a reference subcarrier spacing, where the reference subcarrier spacing is equal to a subcarrier spacing of an uplink BWP or a downlink BWP, or the reference subcarrier spacing is equal to a subcarrier spacing used for slot format configuration. In a subsidiary embodiment of the foregoing embodiment, a quantity of bits included in the bitmap is equal to a positive integer multiple of a quantity of time domain symbols that are included in the periodic time window and that are indicated as downlink symbols or flexible symbols by tdd-UL-DL-ConfigCommon. In a subsidiary embodiment of the foregoing embodiment, the second information block is used to indicate at least one symbol per subcarrier spacing (per SCS) from the periodic time window.

In an embodiment, the second information block indicating at least one full-duplex symbol includes: The second information block includes a bitmap (bitmap), where any bit in the bitmap corresponds to one time domain symbol in one periodic time window, and a time domain symbol that is in the periodic time window and that corresponds to a bit with a bit value equal to "0" in the bitmap is a full-duplex symbol, and a time domain symbol that is in the periodic time window and that corresponds to a bit with a bit value equal to "1" in the bitmap is a non-full-duplex symbol. In a subsidiary embodiment of the foregoing embodiment, a link direction of the time domain symbol that is in the periodic time window and that corresponds to the bit with the bit value equal to "1" in the bitmap is provided by tdd-UL-DL-ConfigCommon. In a subsidiary embodiment of the foregoing embodiment, the time domain symbol that is in the periodic time window and that corresponds to the bit with the bit value equal to "1" in the bitmap is a downlink symbol or a flexible symbol. In a subsidiary embodiment of the foregoing embodiment, any bit in the bitmap corresponds to a time domain symbol that is in the periodic time window and that is indicated as a downlink symbol or a flexible symbol by tdd-UL-DL-ConfigCommon. In a subsidiary embodiment of the foregoing embodiment, a quantity of bits included in the bitmap is equal to a quantity of time domain symbols included in the periodic time window. In a subsidiary embodiment of the foregoing embodiment, a quantity of bits included in the bitmap is equal to a quantity of time domain symbols that are included in the periodic time window and that correspond to a reference subcarrier spacing, where the reference subcarrier spacing is equal to a subcarrier spacing of an uplink BWP or a downlink BWP, or the reference subcarrier spacing is equal to a subcarrier spacing used for slot format configuration. In a subsidiary embodiment of the foregoing embodiment, a quantity of bits included in the bitmap is equal to a positive integer multiple of a quantity of time domain symbols that are included in the periodic time window and that are indicated as downlink symbols or flexible symbols by tdd-UL-DL-ConfigCommon. In a subsidiary embodiment of the foregoing embodiment, the second information block is used to indicate at least one symbol per subcarrier spacing (per SCS) from the periodic time window.

In an embodiment, indicating the full-duplex symbol through a bitmap maximizes configuration flexibility.

In an embodiment, the second information block indicating at least one full-duplex symbol includes: The second information block includes one SLIV, and a start full-duplex symbol in one periodic time window and a quantity of consecutive symbols included in the periodic time window are used to generate the SLIV included in the second information block.

In an embodiment, the second information block indicating at least one full-duplex symbol includes: The second information block includes one SLIV, and a start full-duplex symbol in one periodic time window and a quantity of consecutive symbols included in the periodic time window are used to generate the SLIV included in the second information block, where a symbol that is in the included consecutive symbols and that overlaps with a downlink or flexible symbol indicated by tdd-UL-DL-ConfigCommon is a full-duplex symbol.

In an embodiment, the second information block indicating at least one full-duplex symbol includes: The second information block includes one SLIV for a reference subcarrier spacing, and a start full-duplex symbol for the reference subcarrier spacing in one periodic time window and a quantity of consecutive symbols included in the periodic time window are used to generate the SLIV included in the second information block, where a symbol that is in the included consecutive symbols and that overlaps with a downlink or flexible symbol indicated by tdd-UL-DL-ConfigCommon is a full-duplex symbol. In a subsidiary embodiment of the foregoing embodiment, the reference subcarrier spacing is equal to a subcarrier spacing of an uplink BWP or a downlink BWP, or the reference subcarrier spacing is equal to a subcarrier spacing used for slot format configuration.

In an embodiment, indicating a full-duplex symbol through an SLIV reduces signaling overheads while maintaining specific configuration flexibility, and is well compatible with a limitation of no more than two conversion points between a full-duplex symbol and a non-full-duplex symbol.

In an embodiment, the first PRACH occasion is any PRACH occasion in the plurality of PRACH occasions that overlaps in time domain with at least one full-duplex symbol indicated by the second information block.

In an embodiment, the first PRACH occasion is a given PRACH occasion in the plurality of PRACH occasions that overlaps in time domain with at least one full-duplex symbol indicated by the second information block.

In an embodiment, the technical feature "the first PRACH occasion overlaps in time domain with at least one full-duplex symbol indicated by the second information block" includes: The first PRACH occasion occupies, in time domain, at least one full-duplex symbol indicated by the second information block.

In an embodiment, the technical feature "the first PRACH occasion overlaps in time domain with at least one full-duplex symbol indicated by the second information block" includes: The first PRACH occasion overlaps in time domain with at least one full-duplex symbol that is indicated by the second information block and that is indicated as downlink by tdd-UL-DL-ConfigCommon.

In an embodiment, the technical feature "the first PRACH occasion overlaps in time domain with at least one full-duplex symbol indicated by the second information block" includes: The first PRACH occasion is located, in time domain, in at least one full-duplex symbol that is indicated by the second information block and that is indicated as downlink by tdd-UL-DL-ConfigCommon.

In an embodiment, the technical feature "the first PRACH occasion overlaps in time domain with at least one full-duplex symbol indicated by the second information block" includes: The first PRACH occasion is located, in time domain, in a full-duplex symbol.

In an embodiment, the technical feature "the first PRACH occasion overlaps in time domain with at least one full-duplex symbol indicated by the second information block" includes: The first PRACH occasion completely overlaps (overlapped) in time domain with at least one full-duplex symbol indicated by the second information block.

In an embodiment, the technical feature "the first PRACH occasion overlaps in time domain with at least one full-duplex symbol indicated by the second information block" includes: The first PRACH occasion completely or partially overlaps (overlapped) in time domain with at least one full-duplex symbol indicated by the second information block.

In an embodiment, the technical feature "the first PRACH occasion overlaps in time domain with at least one full-duplex symbol indicated by the second information block" includes: The first PRACH occasion includes at least one full-duplex symbol in time domain.

In an embodiment, the technical feature "the first PRACH occasion overlaps in time domain with at least one full-duplex symbol indicated by the second information block" includes: A PRACH slot to which the first PRACH occasion belongs in time domain overlaps with at least one full-duplex symbol indicated by the second information block.

In an embodiment, the technical feature "the first PRACH occasion overlaps in time domain with at least one full-duplex symbol indicated by the second information block" includes: The first PRACH occasion overlaps in time domain with a slot that includes at least one full-duplex symbol indicated by the second information block.

In an embodiment, a valid (valid) PRACH occasion is a PRACH occasion that can be used for PRACH transmission.

In an embodiment, a valid (valid) PRACH occasion is a PRACH occasion associated with a synchronization broadcast signal.

In an embodiment, a valid (valid) PRACH occasion is a PRACH occasion to which a synchronization broadcast signal is mapped.

In an embodiment, a valid (valid) PRACH occasion is a PRACH occasion mapped to a synchronization broadcast signal.

In an embodiment, a valid (valid) PRACH occasion is a PRACH occasion that can be used for uplink synchronization.

In an embodiment, the plurality of PRACH occasions include at least one valid PRACH occasion.

In an embodiment, all PRACH occasions included in the plurality of PRACH occasions are invalid PRACH occasions.

In an embodiment, all PRACH occasions included in the plurality of PRACH occasions are valid PRACH occasions.

In an embodiment, the synchronization broadcast signal is a synchronization signal (synchronization signal).

In an embodiment, the synchronization broadcast signal is a physical broadcast channel (PBCH, physical broadcast channel).

In an embodiment, the synchronization broadcast signal includes a synchronization signal and a physical broadcast channel.

In an embodiment, the synchronization broadcast signal is a synchronization signal/physical broadcast channel block (SS/PBCH block).

In an embodiment, the synchronization broadcast signal is a synchronization signal block (SSB, synchronization signal block).

In an embodiment, the synchronization broadcast signal is a 6G synchronization signal or a 6G physical broadcast channel.

In an embodiment, the technical feature "the synchronization broadcast signal is mapped to a valid PRACH occasion in the plurality of PRACH occasions" includes: An index or identifier of the synchronization broadcast signal is mapped to the valid PRACH occasion in the plurality of PRACH occasions.

In an embodiment, the technical feature "the synchronization broadcast signal is mapped to a valid PRACH occasion in the plurality of PRACH occasions" includes: The synchronization broadcast signal is mapped only to the valid PRACH occasion in the plurality of PRACH occasions.

In an embodiment, the technical feature "the synchronization broadcast signal is mapped to a valid PRACH occasion in the plurality of PRACH occasions" includes: The synchronization broadcast signal is not mapped to an invalid PRACH occasion in the plurality of PRACH occasions.

In an embodiment, the technical feature "the synchronization broadcast signal is mapped to a valid PRACH occasion in the plurality of PRACH occasions" includes: The synchronization broadcast signal and the valid PRACH occasion in the plurality of PRACH occasions are associated (associate) with each other.

In an embodiment, the technical feature "the synchronization broadcast signal is mapped to a valid PRACH occasion in the plurality of PRACH occasions" includes: The synchronization broadcast signal and the valid PRACH occasion in the plurality of PRACH occasions are mapped (map) to each other.

In an embodiment, the technical feature "the synchronization broadcast signal is mapped to a valid PRACH occasion in the plurality of PRACH occasions" includes: The synchronization broadcast signal and the valid PRACH occasion in the plurality of PRACH occasions correspond (correspond) to each other.

In an embodiment, the technical feature "the synchronization broadcast signal is mapped to a valid PRACH occasion in the plurality of PRACH occasions" includes: The synchronization broadcast signal and the valid PRACH occasion in the plurality of PRACH occasions are mapped according to a predefined mapping rule.

In an embodiment, the technical feature "the synchronization broadcast signal is mapped to a valid PRACH occasion in the plurality of PRACH occasions" includes: The synchronization broadcast signal and the valid PRACH occasion in the plurality of PRACH occasions are mapped in the following mapping order: first, a preamble index in a PRACH occasion; next, a frequency resource index of a frequency-division PRACH occasion; then, a time domain resource index of a time-division PRACH occasion in a PRACH slot; and finally, an index of a PRACH slot.

In an embodiment, the technical feature "the synchronization broadcast signal is mapped to a valid PRACH occasion in the plurality of PRACH occasions" includes: Indexes of the synchronization broadcast signal are mapped in ascending order of the indexes in one time window to the valid PRACH occasion in the plurality of PRACH occasions.

In an embodiment, the mapping between the synchronization broadcast signal and the valid PRACH occasion in the plurality of PRACH occasions is used for analog beam correspondence, and the standard does not explicitly define analog beams.

In an embodiment, the mapping between the synchronization broadcast signal and the valid PRACH occasion in the plurality of PRACH occasions is used to associate a receive beam and a transmit beam, where the receive beam and the transmit beam are left to implementation, and are not defined in the standard.

In an embodiment, a quantity of valid PRACH occasions to which an index of one synchronization broadcast signal is mapped is configurable or predefined.

In an embodiment, a quantity of indexes of synchronization broadcast signals mapped to one valid PRACH occasion is configurable or predefined.

In an embodiment, the technical feature "the validity of the first PRACH occasion depends on the relationship between the first PRACH occasion and the target subband in frequency domain" includes: Whether the first PRACH occasion is valid depends on the relationship between the first PRACH occasion and the target subband in frequency domain.

In an embodiment, the technical feature "the validity of the first PRACH occasion depends on the relationship between the first PRACH occasion and the target subband in frequency domain" includes: The validity of the first PRACH occasion is related to the relationship between the first PRACH occasion and the target subband in frequency domain.

In an embodiment, the technical feature "the validity of the first PRACH occasion depends on the relationship between the first PRACH occasion and the target subband in frequency domain" includes: The relationship between the first PRACH occasion and the target subband in frequency domain is used to determine whether the first PRACH occasion is valid.

In an embodiment, the technical feature "the validity of the first PRACH occasion depends on the relationship between the first PRACH occasion and the target subband in frequency domain" includes: The validity of the first PRACH occasion depends on the first PRACH occasion belonging to the target subband in frequency domain.

In an embodiment, the technical feature "the validity of the first PRACH occasion depends on the relationship between the first PRACH occasion and the target subband in frequency domain" includes: The first PRACH occasion is valid when the first PRACH occasion belongs to the target subband in frequency domain.

In an embodiment, the technical feature "the validity of the first PRACH occasion depends on the relationship between the first PRACH occasion and the target subband in frequency domain" includes: The first PRACH occasion is invalid when the first PRACH occasion does not belong to the target subband in frequency domain.

In an embodiment, the technical feature "the validity of the first PRACH occasion depends on the relationship between the first PRACH occasion and the target subband in frequency domain" includes: The first PRACH occasion belonging to the target subband in frequency domain is a condition for the first PRACH occasion to be valid.

In an embodiment, the technical feature "the validity of the first PRACH occasion depends on the relationship between the first PRACH occasion and the target subband in frequency domain" includes: The first PRACH occasion belonging to the target subband in frequency domain is a necessary condition for the first PRACH occasion to be valid.

In an embodiment, the technical feature "the validity of the first PRACH occasion depends on the relationship between the first PRACH occasion and the target subband in frequency domain" includes: The first PRACH occasion belonging to the target subband in frequency domain, and a frequency domain interval between the first PRACH occasion and at least one boundary of the target subband in frequency domain being not less than a predefined or configured threshold are conditions for the first PRACH occasion to be valid.

In an embodiment, the technical feature "the validity of the first PRACH occasion depends on the relationship between the first PRACH occasion and the target subband in frequency domain" includes: The validity of the first PRACH occasion depends only on the relationship between the first PRACH occasion and the target subband in frequency domain.

In an embodiment, the technical feature "the validity of the first PRACH occasion depends on the relationship between the first PRACH occasion and the target subband in frequency domain" includes: The validity of the first PRACH occasion depends on the relationship between the first PRACH occasion and the target subband in frequency domain, and another condition.

In an embodiment, the technical feature "the validity of the first PRACH occasion depends on the relationship between the first PRACH occasion and the target subband in frequency domain" includes: The validity of the first PRACH occasion depends on a relative positional relationship between the first PRACH occasion and the target subband in frequency domain.

In an embodiment, the technical feature "the validity of the first PRACH occasion depends on the relationship between the first PRACH occasion and the target subband in frequency domain" includes: The validity of the first PRACH occasion depends on the first PRACH occasion belonging to the target subband in frequency domain and a position of the first PRACH occasion in the target subband.

In an embodiment, a condition for the first PRACH occasion to be invalid is not defined in the standard.

In an embodiment, in the standard, a PRACH occasion that does not meet a condition for the PRACH occasion to be valid is an invalid PRACH occasion by default. The standard does not provide an explicit definition.

In an embodiment, a capability of user equipment indicates whether PRACH transmission in a full-duplex symbol is supported.

In an embodiment, a capability of user equipment indicates whether SBFD is supported.

In an embodiment, a capability of user equipment indicating support for PRACH transmission in a full-duplex symbol depends on whether the capability of the user equipment indicates support for SBFD.

### Embodiment 2

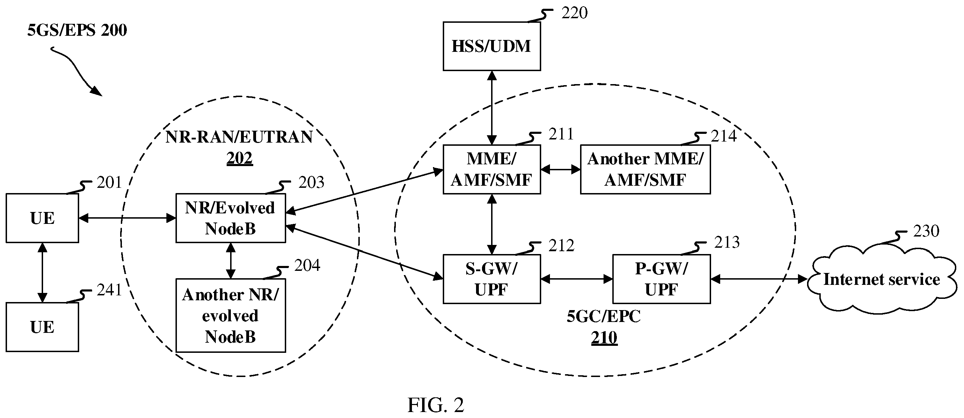

Embodiment 2 illustrates a schematic diagram of a network architecture according to this application, as shown in FIG. 2. FIG. 2 describes a diagram of a network architecture 200 of 5G NR, LTE (Long-Term Evolution, long-term evolution), and LTE-A (Long-Term Evolution Advanced, long-term evolution advanced) systems. The 5G NR or LTE network architecture 200 may be referred to as a 5GS (5G System)/EPS (Evolved Packet System, evolved packet system) 200 or some other suitable term. The 5GS/EPS 200 may include one or more of UE (User Equipment, user equipment) 201, an NG-RAN (next generation radio access network) 202, a 5GC (5G Core Network, 5G core network)/EPC (Evolved Packet Core, evolved packet core) 210, an HSS (Home Subscriber Server, home subscriber server)/UDM (Unified Data Management, unified data management) 220, and an Internet service 230. The 5GS/EPS may be interconnected with another access network, but these entities/interfaces are not shown for simplicity. As shown in the figure, the 5GS/EPS provides a packet-switched service. However, a person skilled in the art will readily understand that the various concepts presented throughout this application can be extended to a network providing a circuit-switched service or another cellular network. The NG-RAN includes an NR/evolved NodeB (gNB/eNB) 203 and another gNB (eNB) 204. The gNB (eNB) 203 provides user and control plane protocol termination toward the UE 201. The gNB (eNB) 203 may be connected to another gNB (eNB) 204 via an Xn/X2 interface (for example, backhaul). The gNB (eNB) 203 may also be referred to as a base station, a base transceiver station, a radio base station, a radio transceiver, a transceiver function, a basic service set (BSS), an extended service set (ESS), a TRP (transmission reception point), or some other suitable term. The gNB (eNB) 203 provides an access point to the 5GC/EPC 210 for the UE 201. Instances of the UE 201 include a cellular phone, a smart phone, a session initiation protocol (SIP) phone, a laptop computer, a personal digital assistant (PDA), satellite radio, non-terrestrial base station communication, satellite mobile communication, a global positioning system, a multimedia apparatus, a video apparatus, a digital audio player (for example, an MP3 player), a camera, a game console, a drone, a flight vehicle, a narrowband internet of things device, a machine type communication device, a land transportation means, an automobile, a wearable device, a test device, a test instrument, a test tool, or any other similar functional apparatus. A person skilled in the art may also refer to the UE 201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable term. The gNB (eNB) 203 is connected to the 5GC/EPC 210 through an S1/NG interface. The 5GC/EPC 210 includes an MME (Mobility Management Entity, mobility management entity)/AMF (Authentication Management Field, authentication management field)/SMF (Session Management Function, session management function) 211, another MME/AMF/SMF 214, an S-GW (Service Gateway, service gateway)/UPF (User Plane Function, user plane function) 212, and a P-GW (Packet Date Network Gateway, packet data network gateway)/UPF 213. The MME/AMF/SMF 211 is a control node that processes signaling between the UE 201 and the 5GC/EPC 210. Generally, the MME/AMF/SMF 211 provides bearer and connection management. All user IP (Internet Protocal, Internet Protocol) packets are transmitted through the S-GW/UPF 212, and the S-GW/UPF 212 itself is connected to the P-GW/UPF 213. The P-GW provides UE IP address allocation and other functions. The P-GW/UPF 213 is connected to the Internet service 230. The Internet service 230 includes corresponding Internet Protocol services of an operator, which may specifically include Internet, intranet, IMS (IP Multimedia Subsystem, IP multimedia subsystem), and packet-switched streaming services.

In an embodiment, the UE 201 corresponds to the first node device in this application.

In an embodiment, the UE 201 supports transmission in a flexible duplex mode.

In an embodiment, the gNB (eNB) 201 corresponds to the second node device in this application.

In an embodiment, the gNB (eNB) 201 supports transmission in a flexible duplex mode.

### Embodiment 3

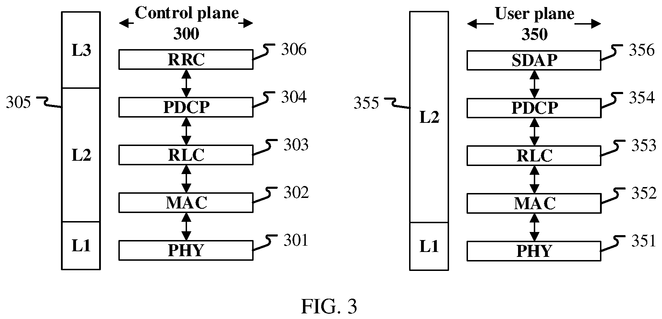

Embodiment 3 illustrates a schematic diagram of an embodiment of a wireless protocol architecture for a user plane and a control plane according to this application, as shown in FIG. 3. FIG. 3 is a schematic diagram describing an embodiment of a radio protocol architecture for a user plane 350 and a control plane 300. FIG. 3 shows a radio protocol architecture for a control plane 300 of a first node device (UE or a gNB) and a second node device (a gNB or UE) by using three layers: a layer 1, a layer 2, and a layer 3. The layer 1 (L1 layer) is a lowest layer and implements various PHY (physical layer) signal processing functions. The L1 layer is referred to as a PHY 301 in this specification. The layer 2 (L2 layer) 305 is above the PHY 301 and is responsible for a link between the first node device and the second node device through the PHY 301. The L2 layer 305 includes a MAC (Medium Access Control, medium access control) sublayer 302, an RLC (Radio Link Control, radio link control protocol) sublayer 303, and a PDCP (Packet Data Convergence Protocol, packet data convergence protocol) sublayer 304. These sublayers terminate at the second node device. The PDCP sublayer 304 provides multiplexing between different radio bearers and logical channels. The PDCP sublayer 304 further provides security by encrypting a data packet, and provides inter-cell mobility support for the first node device between second node devices. The RLC sublayer 303 provides segmentation and reassembly of an upper layer data packet, retransmission of a lost data packet, and reordering of data packets to compensate for out-of-order reception due to HARQ. The MAC sublayer 302 provides multiplexing between logical and transport channels. The MAC sublayer 302 is further responsible for allocating various radio resources (for example, resource blocks) in a cell between first node devices. The MAC sublayer 302 is further responsible for a HARQ operation. An RRC (Radio Resource Control, radio resource control) sublayer 306 of the layer 3 (L3 layer) in the control plane 300 is responsible for obtaining a radio resource (namely, a radio bearer) and configuring a lower layer by using RRC signaling between the second node device and the first node device. The radio protocol architecture of the user plane 350 includes the layer 1 (L1 layer) and the layer 2 (L2 layer). In the user plane 350, the radio protocol architecture for the first node device and the second node device is substantially the same as corresponding layers and sublayers in the control plane 300 with respect to a physical layer 351, a PDCP sublayer 354 of an L2 layer 355, an RLC sublayer 353 of the L2 layer 355, and a MAC sublayer 352 of the L2 layer 355, even though the PDCP sublayer 354 further provides header compression for an upper layer data packet to reduce radio transmission overheads. The L2 layer 355 in the user plane 350 further includes an SDAP (Service Data Adaptation Protocol, service data adaptation protocol) sublayer 356. The SDAP sublayer 356 is responsible for mapping between a QoS flow and a data radio bearer (DRB, Data Radio Bearer) to support service diversity. Although not shown in the figure, the first node device may have several upper layers above the L2 layer 355, including a network layer (for example, an IP layer) terminated at a P-GW on a network side and an application layer terminated at the other end of connection (for example, remote UE and a server).

In an embodiment, the radio protocol architecture in FIG. 3 is applicable to the first node device in this application.

In an embodiment, the radio protocol architecture in FIG. 3 is applicable to the second node device in this application.

In an embodiment, the first information block in this application is generated at the RRC 306, or the MAC 302, or the MAC 352, or the PHY 301, or the PHY 351.

In an embodiment, the second information block in this application is generated at the RRC 306, or the MAC 302, or the MAC 352, or the PHY 301, or the PHY 351.

### Embodiment 4

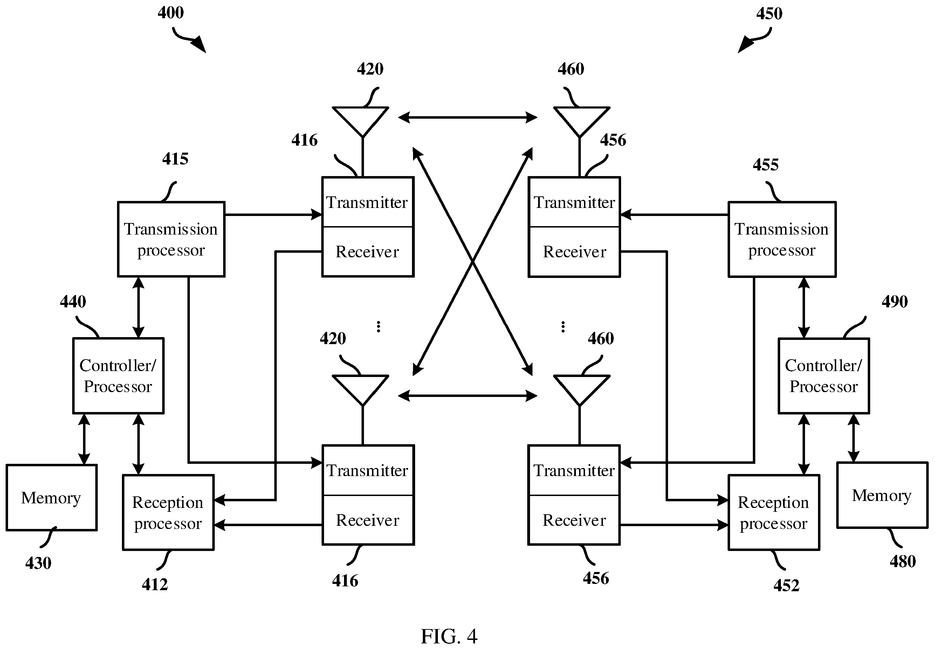

Embodiment 4 illustrates a schematic diagram of a first node device and a second node device according to an embodiment of this application, as shown in FIG. 4.

The first node device (450) may include a controller/processor 490, a data source/cache 480, a reception processor 452, a transmitter/receiver 456, and a transmission processor 455, where the transmitter/receiver 456 includes an antenna 460.

The second node device (410) may include a controller/processor 440, a data source/cache 430, a reception processor 412, a transmitter/receiver 416, and a transmission processor 415, where the transmitter/receiver 416 includes an antenna 420.

In DL (Downlink, downlink), an upper layer packet is provided to the controller/processor 440. The controller/processor 440 implements functions of the L2 layer and an upper layer. In DL, the controller/processor 440 provides header compression, encryption, packet segmentation and reordering, multiplexing between a logical channel and a transport channel, and allocation of radio resources of the first node device 450 based on various priority metrics. The controller/processor 440 is further responsible for a HARQ operation, retransmission of a lost packet, and higher layer signaling to the first node device 450. Higher layer information carried in the first information block and the second information block in this application is generated at the controller/processor 440. The transmission processor 415 implements various signal processing functions for the L1 layer (namely, the physical layer), including encoding, interleaving, scrambling, modulation, power control/allocation, precoding, physical layer control signaling generation, and the like. For example, a physical layer signal carrying the first information block and a physical layer signal carrying the second information block are completed at the transmission processor 415. A generated modulation symbol is divided into parallel streams, and each stream is mapped to a corresponding multi-carrier subcarrier and/or multi-carrier symbol, and then is mapped by the transmission processor 415 via the transmitter 416 to the antenna 420 to be transmitted in a form of a radio frequency signal. At the receive end, each receiver 456 receives a radio frequency signal through a corresponding antenna 460 of the receiver, and each receiver 456 restores baseband information modulated onto a radio frequency carrier and provides the baseband information to the reception processor 452. The reception processor 452 implements various signal reception processing functions of the L1 layer. The signal reception processing functions include reception of the physical layer signal carrying the first information block in this application and the physical layer signal carrying the second information block in this application, demodulation based on various modulation schemes (for example, binary phase shift keying (BPSK), quadrature phase shift keying (QPSK)) and by using a multi-carrier symbol in a multi-carrier symbol stream, followed by descrambling, decoding, and de-interleaving to restore data or control transmitted by the second node device 410 on the physical channel, and then providing the data and a control signal to the controller/processor 490. The controller/processor 490 is responsible for the L2 layer and an upper layer, and the controller/processor 490 interprets higher layer information, including interpreting higher layer information carried in the first information block and the second information block. The controller/processor may be associated with a memory 480 that stores program code and data. The memory 480 may be referred to as a computer-readable medium.

During uplink (UL) transmission, which is similar to downlink transmission, after higher layer information is generated at the controller/processor 490, the transmission processor 455 implements various signal transmission processing functions for the L1 layer (namely, the physical layer), and then the transmission processor 455 maps the higher layer information to the antenna 460 via the transmitter 456 to be transmitted in a form of a radio frequency signal. The receiver 416 receives a radio frequency signal through a corresponding antenna 420 of the receiver, and each receiver 416 restores baseband information modulated onto a radio frequency carrier and provides the baseband information to the reception processor 412. The reception processor 412 implements the various signal reception processing functions for the L1 layer (namely, the physical layer) and then provides the data and/or control signal to the controller/processor 440. The controller/processor 440 implements functions of the L2 layer, including interpreting higher layer information. The controller/processor may be associated with a cache 430 that stores program code and data. The cache 430 may be a computer-readable medium.

In an embodiment, the first node device 450 apparatus includes: at least one processor and at least one memory, where the at least one memory includes computer program code, and the at least one memory and the computer program code are configured to be used with the at least one processor. The first node device 450 apparatus at least: receives a first information block, where the first information block indicates a plurality of PRACH occasions; and receives a second information block, where the second information block indicates a target subband and at least one full-duplex symbol. A first PRACH occasion is one of the plurality of PRACH occasions indicated by the first information block, and the first PRACH occasion overlaps in time domain with the at least one full-duplex symbol indicated by the second information block. A synchronization broadcast signal is mapped to a valid PRACH occasion in the plurality of PRACH occasions, and validity of the first PRACH occasion depends on a relationship between the first PRACH occasion and the target subband in frequency domain.

In an embodiment, the first node device 450 apparatus includes a memory storing a computer-readable instruction program, where the computer-readable instruction program, when executed by at least one processor, generates actions. The actions include: receiving a first information block, where the first information block indicates a plurality of PRACH occasions; and receiving a second information block, where the second information block indicates a target subband and at least one full-duplex symbol. A first PRACH occasion is one of the plurality of PRACH occasions indicated by the first information block, and the first PRACH occasion overlaps in time domain with the at least one full-duplex symbol indicated by the second information block. A synchronization broadcast signal is mapped to a valid PRACH occasion in the plurality of PRACH occasions, and validity of the first PRACH occasion depends on a relationship between the first PRACH occasion and the target subband in frequency domain.

In an embodiment, the second node device 410 apparatus includes at least one processor and at least one memory. The at least one memory includes computer program code, and the at least one memory and the computer program code are configured to be used with the at least one processor. The second node device 410 apparatus at least: sends a first information block, where the first information block indicates a plurality of PRACH occasions; and sends a second information block, where the second information block indicates a target subband and at least one full-duplex symbol. A first PRACH occasion is one of the plurality of PRACH occasions indicated by the first information block, and the first PRACH occasion overlaps in time domain with the at least one full-duplex symbol indicated by the second information block. A synchronization broadcast signal is mapped to a valid PRACH occasion in the plurality of PRACH occasions, and validity of the first PRACH occasion depends on a relationship between the first PRACH occasion and the target subband in frequency domain.

In an embodiment, the second node device 410 includes a memory storing a computer-readable instruction program, where the computer-readable instruction program, when executed by at least one processor, generates actions. The actions include: sending a first information block, where the first information block indicates a plurality of PRACH occasions; and sending a second information block, where the second information block indicates a target subband and at least one full-duplex symbol. A first PRACH occasion is one of the plurality of PRACH occasions indicated by the first information block, and the first PRACH occasion overlaps in time domain with the at least one full-duplex symbol indicated by the second information block. A synchronization broadcast signal is mapped to a valid PRACH occasion in the plurality of PRACH occasions, and validity of the first PRACH occasion depends on a relationship between the first PRACH occasion and the target subband in frequency domain.

In an embodiment, the first node device 450 is user equipment (UE).

In an embodiment, the first node device 450 is user equipment that supports transmission in a flexible duplex mode.

In an embodiment, the second node device 410 is a base station device (gNB/eNB).

In an embodiment, the second node device 410 is a base station device that supports transmission in a flexible duplex mode.

In an embodiment, the receiver 456 (including the antenna 460), the reception processor 452, and the controller/processor 490 are configured to receive the first information block in this application.

In an embodiment, the receiver 456 (including the antenna 460), the reception processor 452, and the controller/processor 490 are configured to receive the second information block in this application.

In an embodiment, the transmitter 416 (including the antenna 420), the transmission processor 415, and the controller/processor 440 are configured to send the first information block in this application.

In an embodiment, the transmitter 416 (including the antenna 420), the transmission processor 415, and the controller/processor 440 are configured to send the second information block in this application.

### Embodiment 5

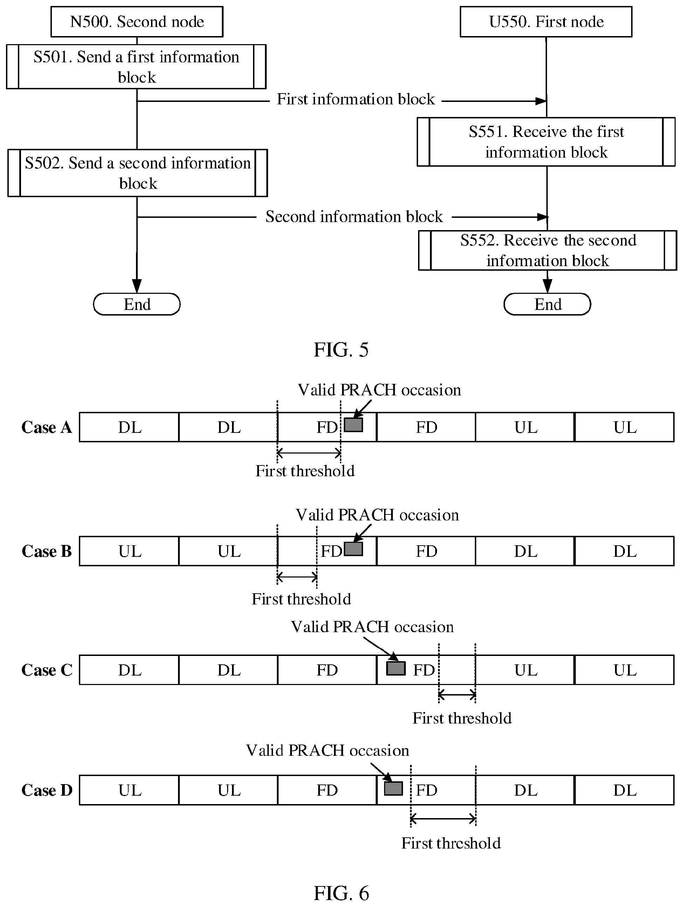

Embodiment 5 illustrates a flowchart of transmission of a wireless signal according to an embodiment of this application, as shown in FIG. 5. In FIG. 5, the second node device N500 is a maintenance base station for a serving cell of the first node device U550. It should be particularly noted that an order in this example does not limit an order of signal transmission and implementation in this application.

For the **second node device N500**, the first information block is sent in step S501, and the second information block is sent in step S502.

For the **first node device U550**, the first information block is received in step S551, and the second information block is received in step S552.

In Embodiment 5, the first information block indicates a plurality of PRACH occasions, and the second information block indicates a target subband and at least one full-duplex symbol. A first PRACH occasion is one of the plurality of PRACH occasions indicated by the first information block, and the first PRACH occasion overlaps in time domain with the at least one full-duplex symbol indicated by the second information block. A synchronization broadcast signal is mapped to a valid PRACH occasion in the plurality of PRACH occasions, and validity of the first PRACH occasion depends on a relationship between the first PRACH occasion and the target subband in frequency domain.

### Embodiment 6

Embodiment 6 illustrates a schematic diagram of a first threshold according to an embodiment of this application, as shown in FIG. 6. In FIG. 6, an unfilled rectangle in each case represents a slot, "DL" represents that a symbol in a slot is a downlink symbol that is not configured with a full-duplex symbol, "UL" represents that a symbol in a slot is an uplink symbol, "FD" represents that a symbol in a slot is a full-duplex symbol, and a small gray-filled rectangle represents a valid PRACH occasion. In case A, the first threshold represents a threshold of an interval length from a downlink symbol to a full-duplex symbol. In case B, the first threshold represents a threshold of an interval length from an uplink symbol to a full-duplex symbol. In case C, the first threshold represents a threshold of an interval length from a full-duplex symbol to an uplink symbol. In case D, the first threshold represents a threshold of an interval length from a full-duplex symbol to a downlink symbol.

In Embodiment 6, the validity of the first PRACH occasion in this application further depends on a relationship between a first threshold and an interval length between the first PRACH occasion and an adjacent non-full-duplex symbol in time domain, and the first threshold is configured or predefined and/or related to a user equipment capability.

In an embodiment, during judgment of validity of a PRACH occasion, a conversion delay between a full-duplex time domain symbol and a non-full-duplex time domain symbol is considered, thereby increasing a probability of successful transmission of a PRACH while considering a limitation on implementation, and reducing implementation complexity of transmitting a PRACH on a full-duplex time domain symbol.

In an embodiment, the interval length between the first PRACH occasion and the adjacent non-full-duplex symbol in time domain is an interval length between a start of the first PRACH occasion in time domain and a start of the adjacent non-full-duplex symbol.

In an embodiment, the interval length between the first PRACH occasion and the adjacent non-full-duplex symbol in time domain is an interval length between a start of the first PRACH occasion in time domain and an end of the adjacent non-full-duplex symbol.

In an embodiment, the interval length between the first PRACH occasion and the adjacent non-full-duplex symbol in time domain is an interval length between an end of the first PRACH occasion in time domain and a start of the adjacent non-full-duplex symbol.

In an embodiment, the interval length between the first PRACH occasion and the adjacent non-full-duplex symbol in time domain is an interval length between an end of the first PRACH occasion in time domain and an end of the adjacent non-full-duplex symbol.

In an embodiment, the interval length between the first PRACH occasion and the adjacent non-full-duplex symbol in time domain is an interval length between the first PRACH occasion and an adjacent non-full-duplex symbol in time domain.

In an embodiment, the interval length between the first PRACH occasion and the adjacent non-full-duplex symbol in time domain is an interval length between the first PRACH occasion and any adjacent non-full-duplex symbol in time domain.

In an embodiment, the interval length between the first PRACH occasion and the adjacent non-full-duplex symbol in time domain is an interval length between a PRACH slot to which the first PRACH occasion belongs in time domain and an adjacent non-full-duplex symbol.

In an embodiment, the interval length between the first PRACH occasion and the adjacent non-full-duplex symbol in time domain is an interval length between a slot that overlaps with the first PRACH occasion in time domain and an adjacent non-full-duplex symbol.

In an embodiment, the interval length between the first PRACH occasion and the adjacent non-full-duplex symbol in time domain is an interval length between a start of the first PRACH occasion in time domain and a last (last) non-full-duplex symbol. In a subsidiary embodiment of the foregoing embodiment, considering an interval length between the first PRACH occasion and a preceding non-full-duplex symbol meets requirements of different coverage areas for a transmission delay while ensuring a conversion time from a non-full-duplex symbol to a full-duplex symbol.

In an embodiment, the interval length between the first PRACH occasion and the adjacent non-full-duplex symbol in time domain is an interval length between an end of the first PRACH occasion in time domain and a next (next) non-full-duplex symbol. In a subsidiary embodiment of the foregoing embodiment, considering an interval length between the first PRACH occasion and a following non-full-duplex symbol ensures a conversion time from a full-duplex symbol to a non-full-duplex symbol, and reduces implementation complexity.

In an embodiment, the interval length between the first PRACH occasion and the adjacent non-full-duplex symbol in time domain is represented by an absolute time length.

In an embodiment, the interval length between the first PRACH occasion and the adjacent non-full-duplex symbol in time domain is represented by a quantity of symbols.

In an embodiment, the interval length between the first PRACH occasion and the adjacent non-full-duplex symbol in time domain is represented by a quantity of symbols corresponding to a subcarrier spacing of a preamble (preamble).

In an embodiment, the interval length between the first PRACH occasion and the adjacent non-full-duplex symbol in time domain is represented by a quantity of symbols corresponding to a subcarrier spacing of an active uplink BWP.

In an embodiment, the adjacent non-full-duplex symbol is a previous non-full-duplex symbol.

In an embodiment, the adjacent non-full-duplex symbol is a next non-full-duplex symbol.

In an embodiment, the adjacent non-full-duplex symbol is a closest preceding non-full-duplex symbol.

In an embodiment, the adjacent non-full-duplex symbol is a closest following non-full-duplex symbol.

In an embodiment, the adjacent non-full-duplex symbol is a previous or next downlink symbol.

In an embodiment, the adjacent non-full-duplex symbol is a previous or next downlink symbol indicated by tdd-UL-DL-ConfigCommon.

In an embodiment, the adjacent non-full-duplex symbol is a previous or next downlink symbol that is not indicated as a full-duplex symbol.

In an embodiment, the adjacent non-full-duplex symbol is a previous or next downlink symbol that is indicated by tdd-UL-DL-ConfigCommon and that is not indicated as a full-duplex symbol.

In an embodiment, the adjacent non-full-duplex symbol is a previous or next uplink symbol.

In an embodiment, the adjacent non-full-duplex symbol is a previous or next uplink symbol indicated by tdd-UL-DL-ConfigCommon.

In an embodiment, the first threshold is a non-negative integer.

In an embodiment, the first threshold may be a non-integer.

In an embodiment, a unit of the first threshold is second or millisecond.

In an embodiment, the first threshold represents a quantity of symbols.

In an embodiment, the technical feature "the validity of the first PRACH occasion further depends on the relationship between the first threshold and the interval length between the first PRACH occasion and the adjacent non-full-duplex symbol in time domain" includes: The validity of the first PRACH occasion further depends on a magnitude relationship between the first threshold and the interval length between the first PRACH occasion and the adjacent non-full-duplex symbol in time domain.

In an embodiment, the technical feature "the validity of the first PRACH occasion further depends on the relationship between the first threshold and the interval length between the first PRACH occasion and the adjacent non-full-duplex symbol in time domain" includes: A magnitude relationship between the first threshold and the interval length between the first PRACH occasion and the adjacent non-full-duplex symbol in time domain is used to determine or judge whether the first PRACH occasion is valid.

In an embodiment, the technical feature "the validity of the first PRACH occasion further depends on the relationship between the first threshold and the interval length between the first PRACH occasion and the adjacent non-full-duplex symbol in time domain" includes: The condition for the first PRACH occasion to be valid further includes that the interval length between the first PRACH occasion and the adjacent non-full-duplex symbol in time domain is not less than (or greater than) the first threshold.

In an embodiment, the technical feature "the validity of the first PRACH occasion further depends on the relationship between the first threshold and the interval length between the first PRACH occasion and the adjacent non-full-duplex symbol in time domain" includes: The validity of the first PRACH occasion further depends on the start of the first PRACH occasion in time domain being N1 symbols behind the adjacent non-full-duplex symbol, where N1 is the first threshold.

In an embodiment, the technical feature "the validity of the first PRACH occasion further depends on the relationship between the first threshold and the interval length between the first PRACH occasion and the adjacent non-full-duplex symbol in time domain" includes: The validity of the first PRACH occasion further depends on the end of the first PRACH occasion in time domain being N2 symbols preceding the adjacent non-full-duplex symbol, where N2 is the first threshold.

In an embodiment, the technical feature "the validity of the first PRACH occasion further depends on the relationship between the first threshold and the interval length between the first PRACH occasion and the adjacent non-full-duplex symbol in time domain" includes: The first PRACH occasion is valid when the first PRACH occasion belongs to the target subband in frequency domain and the start of the first PRACH occasion in time domain is N1 symbols behind the adjacent non-full-duplex symbol, where N1 is the first threshold.

In an embodiment, the technical feature "the validity of the first PRACH occasion further depends on the relationship between the first threshold and the interval length between the first PRACH occasion and the adjacent non-full-duplex symbol in time domain" includes: The first PRACH occasion is valid when the first PRACH occasion belongs to the target subband in frequency domain and the end of the first PRACH occasion in time domain is N2 symbols preceding the adjacent non-full-duplex symbol, where N2 is the first threshold.

In an embodiment, the technical feature "the validity of the first PRACH occasion further depends on the relationship between the first threshold and the interval length between the first PRACH occasion and the adjacent non-full-duplex symbol in time domain" includes: The first PRACH occasion is valid when the first PRACH occasion belongs to the target subband in frequency domain, and the frequency domain interval between the first PRACH occasion and at least one boundary of the target subband in frequency domain is not less than a configured or predefined threshold, and the start of the first PRACH occasion in time domain is N1 symbols behind the adjacent non-full-duplex symbol, where N1 is the first threshold.

In an embodiment, the technical feature "the validity of the first PRACH occasion further depends on the relationship between the first threshold and the interval length between the first PRACH occasion and the adjacent non-full-duplex symbol in time domain" includes: The first PRACH occasion is valid when the first PRACH occasion belongs to the target subband in frequency domain, and the frequency domain interval between the first PRACH occasion and at least one boundary of the target subband in frequency domain is not less than a configured or predefined threshold, and the end of the first PRACH occasion in time domain is N2 symbols preceding the adjacent non-full-duplex symbol, where N2 is the first threshold.

In an embodiment, the technical feature "the validity of the first PRACH occasion further depends on the relationship between the first threshold and the interval length between the first PRACH occasion and the adjacent non-full-duplex symbol in time domain" includes: The first PRACH occasion is valid when the first PRACH occasion belongs to the target subband in frequency domain and the start of the first PRACH occasion in time domain is N1 symbols behind the adjacent non-full-duplex symbol, and the end of the first PRACH occasion in time domain is N2 symbols preceding the adjacent non-full-duplex symbol, where N1 or N2 is the first threshold, N1 is a non-negative integer, and N2 is a non-negative integer.

In an embodiment, the technical feature "the validity of the first PRACH occasion further depends on the relationship between the first threshold and the interval length between the first PRACH occasion and the adjacent non-full-duplex symbol in time domain" includes: The first PRACH occasion is valid when the first PRACH occasion belongs to the target subband in frequency domain, and the frequency domain interval between the first PRACH occasion and at least one boundary of the target subband in frequency domain is not less than a configured or predefined threshold, and the start of the first PRACH occasion in time domain is N1 symbols behind the adjacent non-full-duplex symbol, and the end of the first PRACH occasion in time domain is N2 symbols preceding the adjacent non-full-duplex symbol, where N1 or N2 is the first threshold, N1 is a non-negative integer, and N2 is a non-negative integer.

In an embodiment, the first threshold is configured or predefined.

In an embodiment, the first threshold is related to a user equipment capability.

In an embodiment, the first threshold is configured and related to a user equipment capability.

In an embodiment, the first threshold being configured includes: Higher layer signaling or a higher layer parameter indicates the first threshold.

In an embodiment, the first threshold being configured includes: The first threshold depends on higher layer signaling or a higher layer parameter.

In an embodiment, the first threshold being configured includes: The first threshold depends on a subcarrier spacing, and higher layer signaling or a higher layer parameter indicates the subcarrier spacing on which the first threshold depends.

In an embodiment, the first threshold being configured includes: Higher layer signaling or a higher layer parameter indicates whether the first threshold is equal to a value reported by a user equipment capability.

In an embodiment, the first threshold being configured includes: Higher layer signaling or a higher layer parameter indicates an offset value between the first threshold and a value reported by a user equipment capability.

In an embodiment, the first threshold being configured includes: A parameter for calculating the first threshold includes a first parameter value, and higher layer signaling or a higher layer parameter indicates the first parameter value.

In an embodiment, the first threshold being configured includes: The first threshold is linearly related to a first parameter value, and higher layer signaling or a higher layer parameter indicates the first parameter value.

In an embodiment, the first threshold being predefined includes: The first threshold is fixed.

In an embodiment, the first threshold being predefined includes: The first threshold is hard coded (hard coded) in the standard.

In an embodiment, the first threshold being predefined includes: A relationship between the first threshold and a value of another parameter is fixed.

In an embodiment, the first threshold being predefined includes: A correspondence between the first threshold and a subcarrier spacing is fixed.

In an embodiment, the first threshold being predefined includes: A parameter for calculating the first threshold includes a first parameter value, and the first parameter value is a fixed value.

In an embodiment, the first threshold being related to a user equipment capability includes: The first threshold is equal to a value reported by the user equipment capability.

In an embodiment, the first threshold being related to a user equipment capability includes: The first threshold is not less than a value reported by the user equipment capability.

In an embodiment, the first threshold being related to a user equipment capability includes: A parameter for calculating the first threshold includes a first parameter value, and the first parameter value is equal to a value reported by the user equipment capability.

In an embodiment, the first threshold being related to a user equipment capability includes: The first threshold is linearly related to a first parameter value, and the first parameter value is equal to a value reported by the user equipment capability.

In an embodiment, the first threshold being related to a user equipment capability further depends on whether the user equipment capability supports SBFD or whether the user equipment capability supports transmission of a PRACH in a downlink full-duplex symbol.

In an embodiment, the network configuring the first threshold can take into account a conversion delay between different hardware or algorithm implementations when the network side processes a full-duplex symbol and a non-full-duplex symbol, ensuring effective operation of self-interference cancellation in the network.

In an embodiment, predefining the first threshold can support setting of a fixed and relatively large threshold, simplifying a design while ensuring that conversion and processing delays on the network and user sides are met.

In an embodiment, associating the first threshold with the user equipment capability can ensure that conversion and processing delays of the user equipment are met, reducing implementation complexity of the user equipment.

In an embodiment, the first threshold is associated with the user equipment capability and configured by the network, thereby simultaneously considering different network-side implementations while ensuring that conversion and processing delays of the user equipment are met, further optimizing the setting of the first threshold, avoiding mistakenly harming a valid PRACH occasion, and increasing a capacity of a PRACH.

In an embodiment, the first threshold is equal to a larger value of a first candidate interval and a second candidate interval, where the first candidate interval is configured or related to a subcarrier spacing of a random access preamble, and the second candidate interval is related to a user equipment capability.

In an embodiment, the first threshold is equal to a larger value of *N*_{gap} and a first capability value, *N*_{gap} is related to a subcarrier spacing of a random access preamble, and the first capability value is related to a user equipment capability.

### Embodiment 7

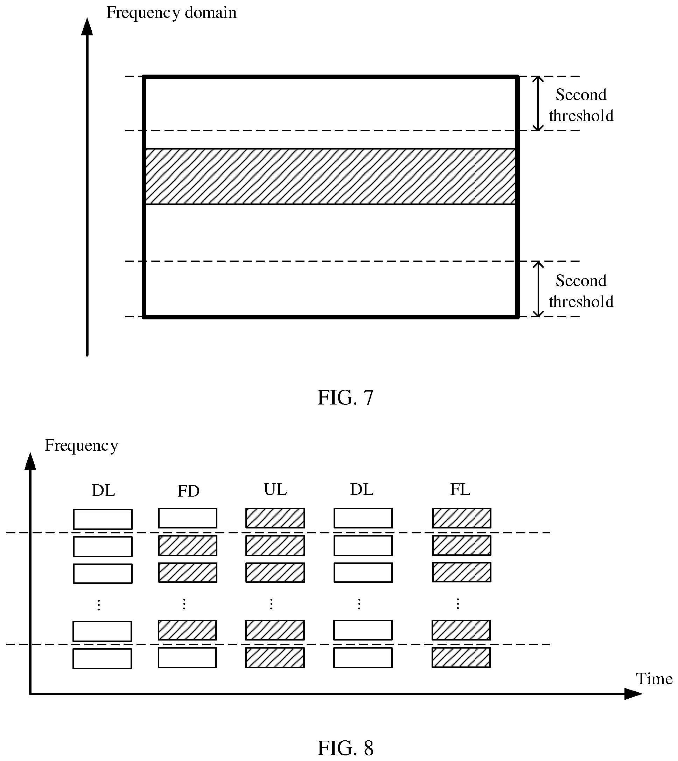

Embodiment 7 illustrates a schematic diagram of a second threshold according to an embodiment of this application, as shown in FIG. 7. In FIG. 7, a vertical axis represents a frequency, a bold rectangular box represents a target subband, a rectangle filled with slashes represents a valid PRACH occasion, and a second threshold represents a threshold of a frequency interval from a boundary of the target subband to the inside of a target band.

In Embodiment 7, the first PRACH occasion in this application belonging to the target subband in this application in frequency domain, and a frequency domain interval between the first PRACH occasion and at least one boundary of the target subband in frequency domain being not less than a second threshold are conditions for the first PRACH occasion to be valid, and the second threshold is predefined or configured.

In an embodiment, considering impact of self-interference on an adjacent band when judging validity of a PRACH occasion ensures effective transmission of a PRACH and improves random access performance.

In an embodiment, the first PRACH occasion belonging to the target subband in frequency domain includes: All frequency domain resources occupied by the first PRACH occasion are located within the target subband.

In an embodiment, the first PRACH occasion belonging to the target subband in frequency domain includes: The target subband includes all frequency domain resources occupied by the first PRACH occasion.

In an embodiment, the frequency domain interval between the first PRACH occasion and at least one boundary of the target subband in frequency domain is a frequency domain interval between a lowest frequency (or a subcarrier with a lowest index) of the first PRACH occasion and at least one boundary of the target subband.

In an embodiment, the frequency domain interval between the first PRACH occasion and at least one boundary of the target subband in frequency domain is a frequency domain interval between a highest frequency (or a subcarrier with a highest index) of the first PRACH occasion and at least one boundary of the target subband.

In an embodiment, the frequency domain interval between the first PRACH occasion and at least one boundary of the target subband in frequency domain is a frequency domain interval between a lowest frequency (or a subcarrier with a lowest index) of the first PRACH occasion and a lowest frequency (or a subcarrier with a lowest index included) of the target subband.

In an embodiment, the frequency domain interval between the first PRACH occasion and at least one boundary of the target subband in frequency domain is a frequency domain interval between a highest frequency (or a subcarrier with a highest index) of the first PRACH occasion and a highest frequency (or a subcarrier with a highest index included) of the target subband.

In an embodiment, the frequency domain interval between the first PRACH occasion and at least one boundary of the target subband in frequency domain includes a frequency domain interval between a lowest frequency (or a subcarrier with a lowest index) of the first PRACH occasion and a lowest frequency (or a subcarrier with a lowest index included) of the target subband, and a frequency domain interval between a highest frequency (or a subcarrier with a highest index) of the first PRACH occasion and a highest frequency (or a subcarrier with a highest index included) of the target subband.

In an embodiment, the second threshold is a non-negative integer.

In an embodiment, the second threshold may be a non-integer.

In an embodiment, a unit of the second threshold is hertz or kilohertz.

In an embodiment, the second threshold represents a quantity of subcarriers.

In an embodiment, the frequency domain interval between the first PRACH occasion and at least one boundary of the target subband in frequency domain being not less than the second threshold includes: The frequency domain interval between the first PRACH occasion and at least one boundary of the target subband in frequency domain is greater than the second threshold.

In an embodiment, the frequency domain interval between the first PRACH occasion and at least one boundary of the target subband in frequency domain being not less than the second threshold includes: The frequency domain interval between the first PRACH occasion and at least one boundary of the target subband in frequency domain is greater than or equal to the second threshold.

In an embodiment, the frequency domain interval between the first PRACH occasion and at least one boundary of the target subband in frequency domain being not less than the second threshold includes: A frequency domain interval between all frequency resources (or all subcarriers) included in the first PRACH occasion in frequency domain and a lowest frequency (or a subcarrier with a lowest index included) of the target subband is not less than the second threshold.

In an embodiment, the frequency domain interval between the first PRACH occasion and at least one boundary of the target subband in frequency domain being not less than the second threshold includes: A frequency domain interval between all frequency resources (or all subcarriers) included in the first PRACH occasion in frequency domain and a highest frequency (or a subcarrier with a highest index included) of the target subband is not less than the second threshold.

In an embodiment, the frequency domain interval between the first PRACH occasion and at least one boundary of the target subband in frequency domain being not less than the second threshold includes: A frequency domain interval between all frequency resources (or all subcarriers) included in the first PRACH occasion in frequency domain and a lowest frequency (or a subcarrier with a lowest index included) of the target subband is not less than the second threshold; and a frequency domain interval between all frequency resources (or all subcarriers) included in the first PRACH occasion in frequency domain and a highest frequency (or a subcarrier with a highest index included) of the target subband is not less than the second threshold.

In an embodiment, the frequency domain interval between the first PRACH occasion and at least one boundary of the target subband in frequency domain being not less than the second threshold includes: A frequency domain interval between a highest frequency (or a subcarrier with a highest index) of the first PRACH occasion and a highest frequency (or a subcarrier with a highest index included) of the target subband is not less than the second threshold; and a frequency domain interval between a lowest frequency (or a subcarrier with a lowest index) of the first PRACH occasion and a lowest frequency (or a subcarrier with a lowest index included) of the target subband is not less than the second threshold.

In an embodiment, the first PRACH occasion belonging to the target subband in frequency domain and the frequency domain interval between the first PRACH occasion and at least one boundary of the target subband in frequency domain being not less than the second threshold being conditions for the first PRACH occasion to be valid includes: The first PRACH occasion belonging to the target subband in frequency domain and the frequency domain interval between the first PRACH occasion and at least one boundary of the target subband in frequency domain being not less than the second threshold are necessary conditions for the first PRACH occasion to be valid.

In an embodiment, the first PRACH occasion belonging to the target subband in frequency domain and the frequency domain interval between the first PRACH occasion and at least one boundary of the target subband in frequency domain being not less than the second threshold being conditions for the first PRACH occasion to be valid includes: The condition for the first PRACH occasion to be valid includes that the first PRACH occasion belongs to the target subband in frequency domain, and the frequency domain interval between the first PRACH occasion and at least one boundary of the target subband in frequency domain is not less than the second threshold.

In an embodiment, the first PRACH occasion belonging to the target subband in frequency domain and the frequency domain interval between the first PRACH occasion and at least one boundary of the target subband in frequency domain being not less than the second threshold being conditions for the first PRACH occasion to be valid includes: The validity of the first PRACH occasion depends on the first PRACH occasion belonging to the target subband in frequency domain, and the frequency domain interval between the first PRACH occasion and at least one boundary of the target subband in frequency domain is not less than the second threshold.

In an embodiment, the first PRACH occasion belonging to the target subband in frequency domain and the frequency domain interval between the first PRACH occasion and at least one boundary of the target subband in frequency domain being not less than the second threshold being conditions for the first PRACH occasion to be valid includes: The first PRACH occasion is valid when the first PRACH occasion belongs to the target subband in frequency domain, and the frequency domain interval between the first PRACH occasion and at least one boundary of the target subband in frequency domain is not less than the second threshold.

In an embodiment, the first PRACH occasion belonging to the target subband in frequency domain and the frequency domain interval between the first PRACH occasion and at least one boundary of the target subband in frequency domain being not less than the second threshold being conditions for the first PRACH occasion to be valid includes: The first PRACH occasion belonging to the target subband in frequency domain and the frequency domain interval between the first PRACH occasion and at least one boundary of the target subband in frequency domain being not less than the second threshold are used to determine that the first PRACH occasion is valid.

In an embodiment, the second threshold being configured includes: Higher layer signaling or a higher layer parameter indicates the second threshold.

In an embodiment, the second threshold being configured includes: The second threshold depends on higher layer signaling or a higher layer parameter.

In an embodiment, the second threshold being configured includes: The second threshold depends on a subcarrier spacing, and higher layer signaling or a higher layer parameter indicates the subcarrier spacing on which the second threshold depends.

In an embodiment, the second threshold being configured includes: A parameter for calculating the second threshold includes a second parameter value, and higher layer signaling or a higher layer parameter indicates the second parameter value.

In an embodiment, the second threshold being predefined includes: The second threshold is fixed.

In an embodiment, the second threshold being predefined includes: The second threshold is hard coded (hard coded) in the standard.

In an embodiment, the second threshold being predefined includes: A relationship between the second threshold and a value of another parameter is fixed.

In an embodiment, the second threshold being predefined includes: A correspondence between the second threshold and a subcarrier spacing is fixed.

In an embodiment, the second threshold being predefined includes: A parameter for calculating the second threshold includes a second parameter value, and the second parameter value is a fixed value.

In an embodiment, the second threshold is related to a subcarrier spacing of a preamble.

In an embodiment, the second threshold is related to the subcarrier spacing of the target subband.

In an embodiment, the second threshold is related to the subcarrier spacing of the BWP.

In an embodiment, the second threshold is related to both a subcarrier spacing of a preamble and the subcarrier spacing of the target subband.

### Embodiment 8

Embodiment 8 illustrates a schematic diagram of a plurality of PRACH occasions according to an embodiment of this application, as shown in FIG. 8. In FIG. 8, the horizontal axis represents a time, the vertical axis represents a frequency, each rectangle represents one PRACH occasion in the plurality of PRACH occasions, each rectangle filled with slashes represents a valid PRACH occasion, "DL" represents a downlink (Downlink) symbol that is not configured with a full-duplex symbol, "UL" represents an uplink (Uplink) symbol, "FD" represents a full duplex (Full duplex) symbol, and "FL" represents a flexible (Flexible) symbol.

In Embodiment 8, any valid PRACH occasion in the plurality of PRACH occasions in this application is located in an uplink symbol in time domain, or is located in a full-duplex symbol in time domain, or is located in a flexible symbol in time domain.

In an embodiment, any valid PRACH occasion in the plurality of PRACH occasions cannot be located in a downlink symbol that is not configured as a full-duplex symbol.

In an embodiment, any valid PRACH occasion in the plurality of PRACH occasions cannot be located in a downlink symbol that is indicated by tdd-UL-DL-ConfigCommon and that is not configured as a full-duplex symbol by the second information block.

In an embodiment, any valid PRACH occasion in the plurality of PRACH occasions cannot overlap with a downlink symbol that is not configured as a full-duplex symbol.

In an embodiment, any PRACH occasion in the plurality of PRACH occasions that overlaps with a downlink symbol that is not configured as a full-duplex symbol is invalid.

In an embodiment, any valid PRACH occasion in the plurality of PRACH occasions being located in an uplink symbol in time domain includes: Any valid PRACH occasion in the plurality of PRACH occasions is completely located in the uplink symbol in time domain.

In an embodiment, any valid PRACH occasion in the plurality of PRACH occasions being located in an uplink symbol in time domain includes: Any valid PRACH occasion in the plurality of PRACH occasions completely overlaps with the uplink symbol in time domain.

In an embodiment, any valid PRACH occasion in the plurality of PRACH occasions being located in an uplink symbol in time domain includes: Any valid PRACH occasion in the plurality of PRACH occasions is completely located in an uplink symbol indicated by tdd-UL-DL-ConfigCommon in time domain.

In an embodiment, any valid PRACH occasion in the plurality of PRACH occasions being located in a full-duplex symbol in time domain includes: Any valid PRACH occasion in the plurality of PRACH occasions is completely located in the full-duplex symbol in time domain.

In an embodiment, any valid PRACH occasion in the plurality of PRACH occasions being located in a full-duplex symbol in time domain includes: Any valid PRACH occasion in the plurality of PRACH occasions completely overlaps with the full-duplex symbol in time domain.

In an embodiment, any valid PRACH occasion in the plurality of PRACH occasions being located in a full-duplex symbol in time domain includes: Any valid PRACH occasion in the plurality of PRACH occasions is completely located in a full-duplex symbol indicated by the second information block in time domain.

In an embodiment, any valid PRACH occasion in the plurality of PRACH occasions being located in a flexible symbol in time domain includes: Any valid PRACH occasion in the plurality of PRACH occasions is completely located in the flexible symbol in time domain.

In an embodiment, any valid PRACH occasion in the plurality of PRACH occasions being located in a flexible symbol in time domain includes: Any valid PRACH occasion in the plurality of PRACH occasions completely overlaps with the flexible symbol in time domain.

In an embodiment, any valid PRACH occasion in the plurality of PRACH occasions being located in a flexible symbol in time domain includes: Any valid PRACH occasion in the plurality of PRACH occasions is completely located in a flexible symbol indicated by tdd-UL-DL-ConfigCommon in time domain.

In an embodiment, any valid PRACH occasion in the plurality of PRACH occasions being located in a flexible symbol in time domain includes: Any valid PRACH occasion in the plurality of PRACH occasions is completely located in a flexible symbol that is not indicated as a full-duplex symbol by the second information block in time domain.

### Embodiment 9

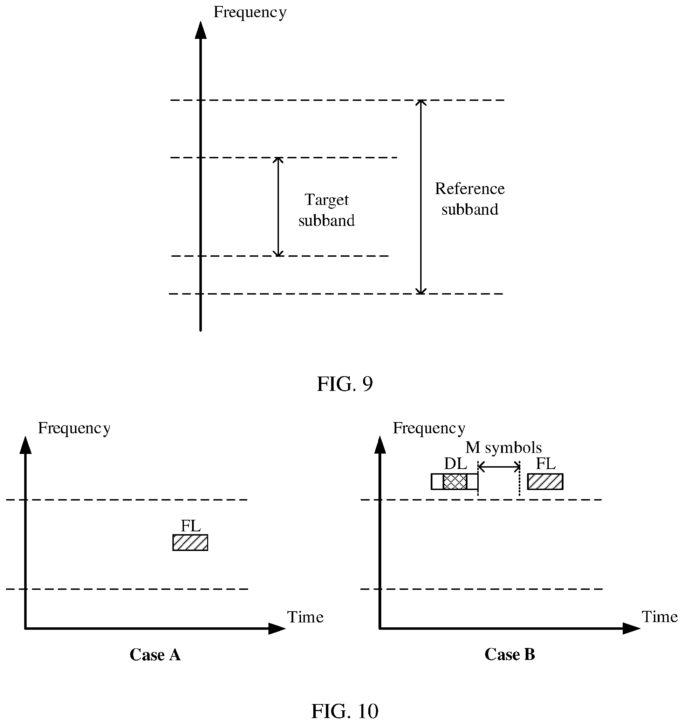

Embodiment 9 illustrates a schematic diagram of a relationship between a target subband and a reference subband according to an embodiment of this application, as shown in FIG. 9. In FIG. 9, the vertical axis represents a frequency, a frequency region between two long dashed lines represents a reference subband, a frequency region between two short dashed lines represents a target subband, and the target subband and the reference subband are non-orthogonal.

In Embodiment 9, a plurality of PRACH occasions in this application belong to the reference subband in frequency domain, the target subband and the reference subband in this application are non-orthogonal, and the first information block in this application indicates a frequency domain interval between a start frequency domain resource occupied by the plurality of PRACH occasions and a start frequency domain resource included in the reference subband.

In an embodiment, a design is further simplified by reusing configuration signaling of a PRACH occasion that is based on a BWP (bandwidth part, bandwidth part).

In an embodiment, the reference subband is a BWP.

In an embodiment, the reference subband is a UL (UL) BWP.

In an embodiment, the reference subband is an active UL BWP or an initial UL BWP.

In an embodiment, the reference subband includes at least one RB (resource block, resource block).

In an embodiment, the reference subband includes at least one RB corresponding to one subcarrier spacing.

In an embodiment, the target subband and the reference subband being non-orthogonal includes: The target subband belongs to the reference subband.

In an embodiment, the target subband and the reference subband being non-orthogonal includes: All frequency domain resources included in the target subband belong to the reference subband. In a subsidiary embodiment of the foregoing embodiment, an advantage of doing so is a simple design, which can be compatible with an existing BWP design.

In an embodiment, the target subband and the reference subband being non-orthogonal includes: Only some frequency domain resources included in the target subband belong to the reference subband. In a subsidiary embodiment of the foregoing embodiment, an advantage of doing so is to provide higher flexibility for configuration of a full-duplex subband, and more fully consider impact of sub-interference.

In an embodiment, the target subband and the reference subband being non-orthogonal includes: The reference subband includes all or some of frequency domain resources of the target subband.

In an embodiment, the target subband and the reference subband being non-orthogonal includes: The target subband is a subset of the reference subband.

In an embodiment, the first information block indicating the frequency domain interval between the start frequency domain resource occupied by the plurality of PRACH occasions and the start frequency domain resource included in the reference subband includes: The first information block indicates a frequency domain interval between a start frequency domain resource occupied by the plurality of PRACH occasions in a time interval occupied by one PRACH occasion and the start frequency domain resource included in the reference subband.

In an embodiment, the first information block indicating the frequency domain interval between the start frequency domain resource occupied by the plurality of PRACH occasions and the start frequency domain resource included in the reference subband includes: The first information block indicates a frequency domain interval between a PRACH occasion with a lowest frequency domain in the plurality of PRACH occasions and the start frequency domain resource included in the reference subband.

In an embodiment, the first information block indicating the frequency domain interval between the start frequency domain resource occupied by the plurality of PRACH occasions and the start frequency domain resource included in the reference subband includes: The first information block indicates a frequency domain interval between a start frequency domain resource of a PRACH occasion with a lowest frequency domain in the plurality of PRACH occasions and the start frequency domain resource included in the reference subband.

In an embodiment, the first information block indicating the frequency domain interval between the start frequency domain resource occupied by the plurality of PRACH occasions and the start frequency domain resource included in the reference subband includes: The first information block indicates a frequency domain offset value between a PRACH occasion with a lowest frequency domain in the plurality of PRACH occasions and a lowest PRB included in the reference subband.

In an embodiment, the first information block indicating the frequency domain interval between the start frequency domain resource occupied by the plurality of PRACH occasions and the start frequency domain resource included in the reference subband includes: The first information block indicates a frequency domain offset value between a PRACH occasion with a lowest frequency domain in the plurality of PRACH occasions and PRB 0 in the reference subband.

In an embodiment, the first information block indicating the frequency domain interval between the start frequency domain resource occupied by the plurality of PRACH occasions and the start frequency domain resource included in the reference subband includes: The first information block indicates a quantity of PRBs spaced between a PRACH occasion with a lowest frequency domain in the plurality of PRACH occasions and PRB 0 in the reference subband.

In an embodiment, the first information block indicating the frequency domain interval between the start frequency domain resource occupied by the plurality of PRACH occasions and the start frequency domain resource included in the reference subband includes: A msg1-FrequencyStart field included in the first information block indicates a frequency domain interval between a start frequency domain resource occupied by the plurality of PRACH occasions and the start frequency domain resource included in the reference subband.

In an embodiment, the first information block indicating the frequency domain interval between the start frequency domain resource occupied by the plurality of PRACH occasions and the start frequency domain resource included in the reference subband includes: A msgA-RO-FrequencyStart-r16 field included in the first information block indicates a frequency domain interval between a start frequency domain resource occupied by the plurality of PRACH occasions and the start frequency domain resource included in the reference subband.

### Embodiment 10

Embodiment 10 illustrates a schematic diagram of a second PRACH occasion according to an embodiment of this application, as shown in FIG. 10. In FIG. 10, in cases A and B, the horizontal axis represents a time, the vertical axis represents a frequency, a frequency domain region between two dashed lines represents a target subband, a rectangle filled with slashes represents a second PRACH occasion, an unfilled rectangle represents a slot that is of the second PRACH occasion and that includes a previous downlink symbol that is not configured as a full-duplex symbol, and a rectangle filled with cross lines represents a symbol occupied by a synchronization broadcast signal. In case A, the second PRACH slot belongs to the target subband. In case B, the second PRACH slot does not belong to the target subband.

In Embodiment 10, the second PRACH occasion is one of the plurality of PRACH occasions in this application, and the second PRACH occasion is located in a flexible symbol but not in a full-duplex symbol in time domain; when the second PRACH occasion belongs to the target subband in this application in frequency domain, the second PRACH occasion is valid; when the second PRACH occasion does not belong to the target subband in frequency domain, and the second PRACH occasion is not located before a synchronization broadcast signal belonging to a same PRACH slot in time domain, and a start of the second PRACH occasion is at least M symbols behind each of a previous downlink symbol and a previous synchronization broadcast signal, the second PRACH occasion is valid, where M is a non-negative integer related to a subcarrier spacing of a random access preamble.

In an embodiment, for a PRACH occasion falling into a flexible symbol, different validity judgment conditions are used based on whether a frequency domain falls into the target subband. This maximizes reuse of an existing design while considering impact of a full-duplex subband, thereby further optimizing a PRACH design.

In an embodiment, the second PRACH occasion is any PRACH occasion in the plurality of PRACH occasions that is located in a flexible symbol but not in a full-duplex symbol in time domain.

In an embodiment, the second PRACH occasion is a given PRACH occasion in the plurality of PRACH occasions that is located in a flexible symbol but not in a full-duplex symbol in time domain.

In an embodiment, the second PRACH occasion and the first PRACH occasion are two different PRACH occasions.

In an embodiment, the second PRACH occasion being located in a flexible symbol but not in a full-duplex symbol in time domain includes: The second PRACH occasion is completely located in the flexible symbol in time domain, and the second PRACH occasion is completely or partially not located in the full-duplex symbol in time domain.

In an embodiment, the second PRACH occasion being located in a flexible symbol but not in a full-duplex symbol in time domain includes: The second PRACH occasion is completely located in the flexible symbol in time domain, and the second PRACH occasion overlaps with a non-full-duplex symbol in time domain.

In an embodiment, the second PRACH occasion being located in a flexible symbol but not in a full-duplex symbol in time domain includes: The second PRACH occasion is completely or partially located in a non-full-duplex flexible symbol in time domain.

In an embodiment, the second PRACH occasion being located in a flexible symbol but not in a full-duplex symbol in time domain includes: The second PRACH occasion overlaps with a non-full-duplex flexible symbol in time domain.

In an embodiment, the second PRACH occasion being located in a flexible symbol but not in a full-duplex symbol in time domain includes: The second PRACH occasion overlaps in time domain with a flexible symbol that is not configured as a full-duplex symbol.

In an embodiment, the second PRACH occasion being located in a flexible symbol but not in a full-duplex symbol in time domain includes: The second PRACH occasion is located in a flexible symbol indicated by tdd-UL-DL-ConfigCommon but not in a full-duplex symbol in time domain.

In an embodiment, the second PRACH occasion being located in a flexible symbol but not in a full-duplex symbol in time domain includes: The second PRACH occasion overlaps in time domain with a flexible symbol that is not configured as a full-duplex symbol and that is indicated by tdd-UL-DL-ConfigCommon.

In an embodiment, the second PRACH occasion being not located before a synchronization broadcast signal belonging to a same PRACH slot in time domain includes: The second PRACH occasion does not precede (not precede) the synchronization broadcast signal belonging to the same PRACH slot in time domain.

In an embodiment, the second PRACH occasion being not located before a synchronization broadcast signal belonging to a same PRACH slot in time domain includes: The second PRACH occasion follows the synchronization broadcast signal belonging to the same PRACH slot in time domain.

In an embodiment, the second PRACH occasion being not located before a synchronization broadcast signal belonging to a same PRACH slot in time domain includes: The second PRACH occasion is not located before a synchronization broadcast signal included in the PRACH slot to which the second PRACH occasion belongs in time domain.

In an embodiment, the start of the second PRACH occasion being at least M symbols behind each of the previous downlink symbol and the previous synchronization broadcast signal includes: A start moment of the second PRACH occasion is at least M symbols behind each of a previous downlink symbol that is not configured as a full-duplex symbol and the previous synchronization broadcast signal.

In an embodiment, the start of the second PRACH occasion being at least M symbols behind each of the previous downlink symbol and the previous synchronization broadcast signal includes: The start of the second PRACH occasion is at least M symbols behind each of a previous downlink symbol that is not configured as a full-duplex symbol and that is indicated by tdd-UL-DL-ConfigCommon and the previous synchronization broadcast signal.

In an embodiment, the start of the second PRACH occasion being at least M symbols behind each of the previous downlink symbol and the previous synchronization broadcast signal includes: The start of the second PRACH occasion is at least M symbols behind each of a previous downlink symbol that is not configured as a full-duplex symbol and that is indicated by tdd-UL-DL-ConfigCommon and the previous synchronization broadcast signal.

In an embodiment, the previous downlink symbol of the second PRACH occasion is a downlink symbol that precedes the second PRACH occasion and that is closest to the second PRACH occasion in time domain.

In an embodiment, the previous downlink symbol of the second PRACH occasion is a downlink symbol that precedes the second PRACH occasion and that has a smallest interval from the second PRACH occasion in time domain.

In an embodiment, the previous downlink symbol of the second PRACH occasion is a downlink symbol that precedes the second PRACH occasion, that has a smallest interval from the second PRACH occasion in time domain, that is not configured as a full-duplex symbol, and that is indicated by tdd-UL-DL-ConfigCommon.

In an embodiment, the previous synchronization broadcast signal of the second PRACH occasion is a synchronization broadcast signal that precedes the second PRACH occasion and that has a smallest interval from the second PRACH occasion in time domain.

In an embodiment, M is equal to a value of *N*_{gap}.

In an embodiment, M is equal to one of 0, 2, 8, and 16.

In an embodiment, M is equal to one of 0 and 2.

In an embodiment, the subcarrier spacing of the random access preamble is configured.

In an embodiment, the subcarrier spacing of the random access preamble depends on the configured random access preamble format (format).

In an embodiment, M being a non-negative integer related to the subcarrier spacing of the random access preamble includes: M is a non-negative integer that depends on the subcarrier spacing of the random access preamble.

In an embodiment, M being a non-negative integer related to the subcarrier spacing of the random access preamble includes: M is a non-negative integer that corresponds to (or is associated with) a configured subcarrier spacing of a random access preamble.

In an embodiment, M being a non-negative integer related to the subcarrier spacing of the random access preamble includes: M is equal to one of X1 candidate integers, where the X1 candidate integers respectively correspond one-to-one to subcarrier spacings of X1 random access preambles, X1 is a positive integer greater than 1, and M is equal to a candidate integer in the X1 candidate integers that corresponds to the configured subcarrier spacing of the random access preamble.

In an embodiment, M being a non-negative integer related to the subcarrier spacing of the random access preamble includes: The subcarrier spacing of the random access preamble is used to determine M, where M is a non-negative integer.

In an embodiment, the user equipment expects that all flexible symbols indicated by tdd-UL-DL-ConfigCommon in one periodic time window are configured as full-duplex symbols or none of the flexible symbols is configured as a full-duplex symbol.

In an embodiment, the user equipment does not expect that some flexible symbols indicated by tdd-UL-DL-ConfigCommon in one periodic time window are configured as full-duplex symbols.

### Embodiment 11

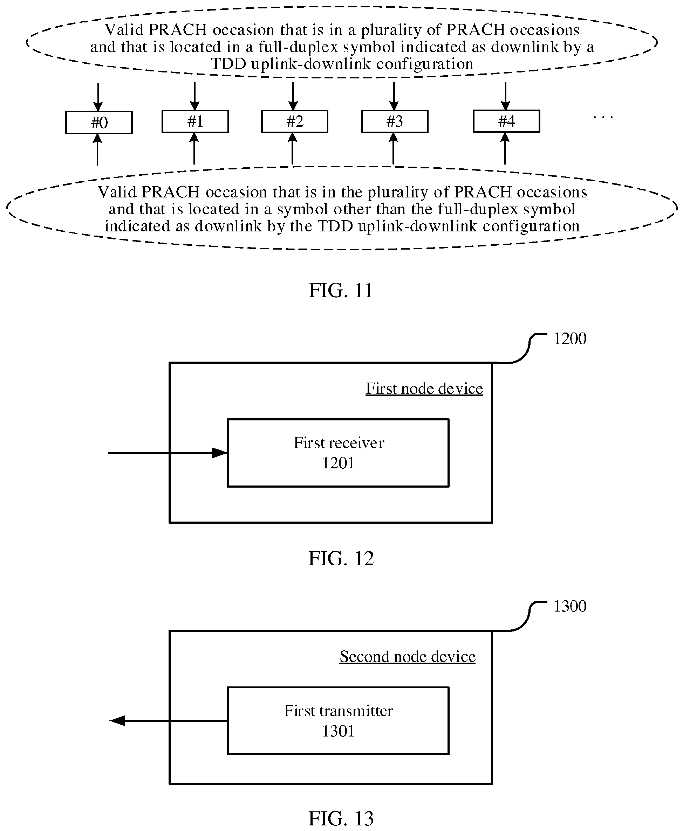

Embodiment 11 illustrates a schematic diagram of mapping between a plurality of PRACH occasions and a synchronization broadcast signal according to an embodiment of this application, as shown in FIG. 11. In FIG. 11, each rectangle represents one transmission of a synchronization broadcast signal, where a number represents an index value of the synchronization broadcast signal, a dashed-line ellipse in the upper part represents a valid PRACH occasion that is in the plurality of PRACH occasions and that is located in a full-duplex symbol indicated as downlink by a TDD uplink-downlink configuration in time domain, and a dashed-line ellipse in the lower part represents a valid PRACH occasion that is in the plurality of PRACH occasions and that is located in a symbol other than the full-duplex symbol indicated as downlink by the TDD uplink-downlink configuration in time domain.

In Embodiment 11, a PRACH occasion that is in the plurality of PRACH occasions in this application and that is located in a full-duplex symbol indicated as downlink by a TDD uplink-downlink configuration in time domain, and a PRACH occasion that is located in a symbol other than the full-duplex symbol indicated as downlink by the TDD uplink-downlink configuration are separately mapped to a synchronization broadcast signal.

In an embodiment, separate mapping of the PRACH occasions in the downlink full-duplex symbol and the symbol other than the downlink full-duplex symbol to the synchronization broadcast signal avoids adverse impact on an existing user while increasing a PRACH capacity, and ensures backward compatibility.

In an embodiment, the TDD uplink-downlink configuration is an uplink/downlink TDD configuration used to determine a slot format.

In an embodiment, the TDD uplink-downlink configuration includes at least configuration information indicating which symbols are downlink symbols, which symbols are flexible symbols, and which symbols are uplink symbols in one periodic time window.

In an embodiment, the TDD uplink-downlink configuration is a higher layer configuration that includes at least indication information of a link direction of a symbol.

In an embodiment, the TDD uplink-downlink configuration is an RRC layer configuration.

In an embodiment, the TDD uplink-downlink configuration is a higher layer configuration.

In an embodiment, the TDD uplink-downlink configuration further includes indication information of a used subcarrier spacing.

In an embodiment, the TDD uplink-downlink configuration further includes indication information of a length of a used periodic time window.

In an embodiment, the TDD uplink-downlink configuration includes some or all of fields in an IE "tdd-UL-DL-ConfigCommon".

In an embodiment, the TDD uplink-downlink configuration includes some or all of fields in an IE "tdd-UL-DL-ConfigDedicated".

In an embodiment, only "tdd-UL-DL-ConfigCommon" is considered, simplifying a design and reducing a standardization workload.

In an embodiment, both "tdd-UL-DL-ConfigCommon" and "tdd-UL-DL-ConfigDedicated" are considered, maximizing reuse of an existing design and ensuring compatibility.

In an embodiment, the PRACH occasion that is located in the full-duplex symbol indicated as downlink by the TDD uplink-downlink configuration is a PRACH occasion on which all occupied (or mapped) time domain resources are located in the full-duplex symbol indicated as downlink by the TDD uplink-downlink configuration.

In an embodiment, the PRACH occasion that is located in the full-duplex symbol indicated as downlink by the TDD uplink-downlink configuration is a PRACH occasion on which all occupied (or mapped) time domain resources overlap with the full-duplex symbol indicated as downlink by the TDD uplink-downlink configuration.

In an embodiment, the PRACH occasion that is located in the full-duplex symbol indicated as downlink by the TDD uplink-downlink configuration is a PRACH occasion that occupies, in time domain, only the full-duplex symbol indicated as downlink by the TDD uplink-downlink configuration.

In an embodiment, the PRACH occasion that is located in the symbol other than the full-duplex symbol indicated as downlink by the TDD uplink-downlink configuration includes a PRACH occasion that is located in an uplink symbol or in a flexible symbol not configured as a full-duplex symbol.

In an embodiment, the PRACH occasion that is located in the symbol other than the full-duplex symbol indicated as downlink by the TDD uplink-downlink configuration includes a PRACH occasion that is located in a symbol not configured as a full-duplex symbol.

In an embodiment, the PRACH occasion that is located in the symbol other than the full-duplex symbol indicated as downlink by the TDD uplink-downlink configuration includes a PRACH occasion located in a non-full-duplex symbol.

In an embodiment, the PRACH occasion that is located in the symbol other than the full-duplex symbol indicated as downlink by the TDD uplink-downlink configuration includes a PRACH occasion on which all occupied (or mapped) time domain resources are located in the symbol other than the full-duplex symbol indicated as downlink by the TDD uplink-downlink configuration.

In an embodiment, the PRACH occasion that is located in the symbol other than the full-duplex symbol indicated as downlink by the TDD uplink-downlink configuration includes a PRACH occasion on which only some occupied (or mapped) time domain resources are located in the symbol other than the full-duplex symbol indicated as downlink by the TDD uplink-downlink configuration.

In an embodiment, the PRACH occasion that is located in the symbol other than the full-duplex symbol indicated as downlink by the TDD uplink-downlink configuration includes a PRACH occasion on which all occupied (or mapped) time domain resources overlap with the symbol other than the full-duplex symbol indicated as downlink by the TDD uplink-downlink configuration.

In an embodiment, the PRACH occasion that is located in the symbol other than the full-duplex symbol indicated as downlink by the TDD uplink-downlink configuration includes a PRACH occasion on which only some occupied (or mapped) time domain resources overlap with the symbol other than the full-duplex symbol indicated as downlink by the TDD uplink-downlink configuration.

In an embodiment, the PRACH occasion that is located in the symbol other than the full-duplex symbol indicated as downlink by the TDD uplink-downlink configuration includes a PRACH occasion that occupies, in time domain, only the symbol other than the full-duplex symbol indicated as downlink by the TDD uplink-downlink configuration.

In an embodiment, the PRACH occasion that is located in the symbol other than the full-duplex symbol indicated as downlink by the TDD uplink-downlink configuration includes a PRACH occasion that occupies, in time domain, both the symbol other than the full-duplex symbol indicated as downlink by the TDD uplink-downlink configuration, and the full-duplex symbol indicated as downlink by the TDD uplink-downlink configuration.

In an embodiment, the PRACH occasion that is in the plurality of PRACH occasions and that is located in the full-duplex symbol indicated as downlink by the TDD uplink-downlink configuration in time domain, and the PRACH occasion that is located in the symbol other than the full-duplex symbol indicated as downlink by the TDD uplink-downlink configuration being separately mapped to the synchronization broadcast signal includes: The PRACH occasion that is in the plurality of PRACH occasions and that is located in the full-duplex symbol indicated as downlink by the TDD uplink-downlink configuration in time domain, and the PRACH occasion that is located in the symbol other than the full-duplex symbol indicated as downlink by the TDD uplink-downlink configuration are independently mapped to the synchronization broadcast signal.

In an embodiment, the PRACH occasion that is in the plurality of PRACH occasions and that is located in the full-duplex symbol indicated as downlink by the TDD uplink-downlink configuration in time domain, and the PRACH occasion that is located in the symbol other than the full-duplex symbol indicated as downlink by the TDD uplink-downlink configuration being separately mapped to the synchronization broadcast signal includes: A PRACH occasion that is in the plurality of PRACH occasions and that is located in a full-duplex symbol of a non-flexible symbol in time domain, and a PRACH occasion located in a symbol other than the full-duplex symbol or in a flexible symbol are separately mapped to the synchronization broadcast signal.

In an embodiment, the PRACH occasion that is in the plurality of PRACH occasions and that is located in the full-duplex symbol indicated as downlink by the TDD uplink-downlink configuration in time domain, and the PRACH occasion that is located in the symbol other than the full-duplex symbol indicated as downlink by the TDD uplink-downlink configuration being separately mapped to the synchronization broadcast signal includes: A PRACH occasion that is in the plurality of PRACH occasions and that is located in a full-duplex symbol indicated as a downlink symbol by tdd-UL-DL-ConfigCommon in time domain, and a PRACH occasion in an uplink symbol or a flexible symbol indicated by tdd-UL-DL-ConfigCommon are separately mapped to the synchronization broadcast signal.

In an embodiment, the PRACH occasion that is in the plurality of PRACH occasions and that is located in the full-duplex symbol indicated as downlink by the TDD uplink-downlink configuration in time domain, and the PRACH occasion that is located in the symbol other than the full-duplex symbol indicated as downlink by the TDD uplink-downlink configuration being separately mapped to the synchronization broadcast signal includes: The PRACH occasion that is in the plurality of PRACH occasions and that is located in the full-duplex symbol indicated as downlink by the TDD uplink-downlink configuration in time domain, and the PRACH occasion that is located in the symbol other than the full-duplex symbol indicated as downlink by the TDD uplink-downlink configuration are separately mapped to the synchronization broadcast signal in the same time window. In a subsidiary embodiment of the foregoing embodiment, an advantage of doing so is to reuse an existing design of an association period (association period), thereby reducing a standardization workload.

In an embodiment, the PRACH occasion that is in the plurality of PRACH occasions and that is located in the full-duplex symbol indicated as downlink by the TDD uplink-downlink configuration in time domain, and the PRACH occasion that is located in the symbol other than the full-duplex symbol indicated as downlink by the TDD uplink-downlink configuration being separately mapped to the synchronization broadcast signal includes: The PRACH occasion that is in the plurality of PRACH occasions and that is located in the full-duplex symbol indicated as downlink by the TDD uplink-downlink configuration in time domain, and the PRACH occasion that is located in the symbol other than the full-duplex symbol indicated as downlink by the TDD uplink-downlink configuration are separately mapped to the synchronization broadcast signal in respective time windows. In a subsidiary embodiment of the foregoing embodiment, an advantage of doing so is to use an independent association period (association period) for the PRACH occasion in the downlink full-duplex symbol, thereby improving flexibility and optimizing PRACH capacity performance.

In an embodiment, the PRACH occasion that is in the plurality of PRACH occasions and that is located in the full-duplex symbol indicated as downlink by the TDD uplink-downlink configuration in time domain, and the PRACH occasion that is located in the symbol other than the full-duplex symbol indicated as downlink by the TDD uplink-downlink configuration being separately mapped to the synchronization broadcast signal includes: The mapping of the PRACH occasion that is in the plurality of PRACH occasions and that is located in the full-duplex symbol indicated as downlink by the TDD uplink-downlink configuration in time domain to the synchronization broadcast signal, and the mapping of the PRACH occasion that is located in the symbol other than the full-duplex symbol indicated as downlink by the TDD uplink-downlink configuration to the synchronization broadcast signal do not affect each other.

In an embodiment, the PRACH occasion that is in the plurality of PRACH occasions and that is located in the full-duplex symbol indicated as downlink by the TDD uplink-downlink configuration in time domain, and the PRACH occasion that is located in the symbol other than the full-duplex symbol indicated as downlink by the TDD uplink-downlink configuration being separately mapped to the synchronization broadcast signal includes: The PRACH occasion that is in the plurality of PRACH occasions and that is located in the full-duplex symbol indicated as downlink by the TDD uplink-downlink configuration in time domain, and the PRACH occasion that is located in the symbol other than the full-duplex symbol indicated as downlink by the TDD uplink-downlink configuration are separately mapped to an index of the synchronization broadcast signal.

In an embodiment, the PRACH occasion that is in the plurality of PRACH occasions and that is located in the full-duplex symbol indicated as downlink by the TDD uplink-downlink configuration in time domain, and the PRACH occasion that is located in the symbol other than the full-duplex symbol indicated as downlink by the TDD uplink-downlink configuration being separately mapped to the synchronization broadcast signal includes: The PRACH occasion that is in the plurality of PRACH occasions and that is located in the full-duplex symbol indicated as downlink by the TDD uplink-downlink configuration in time domain, and the PRACH occasion that is located in the symbol other than the full-duplex symbol indicated as downlink by the TDD uplink-downlink configuration are separately mapped to an index of the synchronization broadcast signal according to a same sorting rule.

In an embodiment, the PRACH occasion that is in the plurality of PRACH occasions and that is located in the full-duplex symbol indicated as downlink by the TDD uplink-downlink configuration in time domain, and the PRACH occasion that is located in the symbol other than the full-duplex symbol indicated as downlink by the TDD uplink-downlink configuration being separately mapped to the synchronization broadcast signal includes: The PRACH occasion that is in the plurality of PRACH occasions and that is located in the full-duplex symbol indicated as downlink by the TDD uplink-downlink configuration in time domain, and the PRACH occasion that is located in the symbol other than the full-duplex symbol indicated as downlink by the TDD uplink-downlink configuration are independently sorted and then separately mapped to the synchronization broadcast signal.

In an embodiment, the PRACH occasion that is in the plurality of PRACH occasions and that is located in the full-duplex symbol indicated as downlink by the TDD uplink-downlink configuration in time domain, and the PRACH occasion that is located in the symbol other than the full-duplex symbol indicated as downlink by the TDD uplink-downlink configuration being separately mapped to the synchronization broadcast signal includes: The PRACH occasions in the full-duplex symbol indicated as downlink by the TDD uplink-downlink configuration are sequentially associated with the synchronization broadcast signal in a given order, and the PRACH occasions in the symbol other than the full-duplex symbol indicated as downlink by the TDD uplink-downlink configuration are also sequentially associated with the synchronization broadcast signal in a given order.

In an embodiment, the PRACH occasion that is in the plurality of PRACH occasions and that is located in the full-duplex symbol indicated as downlink by the TDD uplink-downlink configuration in time domain, and the PRACH occasion that is located in the symbol other than the full-duplex symbol indicated as downlink by the TDD uplink-downlink configuration being separately mapped to the synchronization broadcast signal includes: An index of a synchronization broadcast block and a valid PRACH occasion that is located in the full-duplex symbol indicated as downlink by the TDD uplink-downlink configuration in time domain are sequentially mapped in the following mapping order: first, a preamble index in a PRACH occasion; next, a frequency resource index of a frequency-division PRACH occasion; then, a time domain resource index of a time-division PRACH occasion in a PRACH slot; and finally, an index of a PRACH slot; and the index of the synchronization broadcast block and a valid PRACH occasion that is located in the symbol other than the full-duplex symbol indicated as downlink by the TDD uplink-downlink configuration are sequentially mapped in the following mapping order: first, a preamble index in a PRACH occasion; next, a frequency resource index of a frequency-division PRACH occasion; then, a time domain resource index of a time-division PRACH occasion in a PRACH slot; and finally, an index of a PRACH slot.

In an embodiment, the PRACH occasion that is in the plurality of PRACH occasions and that is located in the full-duplex symbol indicated as downlink by the TDD uplink-downlink configuration in time domain, and the PRACH occasion that is located in the symbol other than the full-duplex symbol indicated as downlink by the TDD uplink-downlink configuration being separately mapped to the synchronization broadcast signal includes: Synchronization broadcast blocks with indexes 0, 1... and a valid PRACH occasion that is located in the full-duplex symbol indicated as downlink by the TDD uplink-downlink configuration in time domain are sequentially mapped in the following mapping order: first, a preamble index in a PRACH occasion; next, a frequency resource index of a frequency-division PRACH occasion; then, a time domain resource index of a time-division PRACH occasion in a PRACH slot; and finally, an index of a PRACH slot; and the synchronization broadcast blocks with indexes 0, 1... and a valid PRACH occasion that is located in the symbol other than the full-duplex symbol indicated as downlink by the TDD uplink-downlink configuration are sequentially mapped in the following mapping order: first, a preamble index in a PRACH occasion; next, a frequency resource index of a frequency-division PRACH occasion; then, a time domain resource index of a time-division PRACH occasion in a PRACH slot; and finally, an index of a PRACH slot.

### Embodiment 12

Embodiment 12 illustrates a structural block diagram of a processing apparatus in a first node device according to an embodiment, as shown in FIG. 12. In FIG. 12, a processing apparatus 1200 in the first node device includes a first receiver 1201. The first receiver 1201 includes a transmitter/receiver 456 (including an antenna 460), a reception processor 452, and a controller/processor 490 in FIG. 4 of this application.

In Embodiment 12, the first receiver 1201 receives a first information block, where the first information block indicates a plurality of PRACH occasions; and the first receiver 1201 receives a second information block, where the second information block indicates a target subband and at least one full-duplex symbol. A first PRACH occasion is one of the plurality of PRACH occasions indicated by the first information block, and the first PRACH occasion overlaps in time domain with the at least one full-duplex symbol indicated by the second information block. A synchronization broadcast signal is mapped to a valid PRACH occasion in the plurality of PRACH occasions, and validity of the first PRACH occasion depends on a relationship between the first PRACH occasion and the target subband in frequency domain.

In an embodiment, the validity of the first PRACH occasion further depends on a relationship between a first threshold and an interval length between the first PRACH occasion and an adjacent non-full-duplex symbol in time domain, and the first threshold is configured or predefined and/or related to a user equipment capability.

In an embodiment, the first PRACH occasion belonging to the target subband in frequency domain, and a frequency domain interval between the first PRACH occasion and at least one boundary of the target subband in frequency domain being not less than a second threshold are conditions for the first PRACH occasion to be valid, and the second threshold is predefined or configured.

In an embodiment, any valid PRACH occasion in the plurality of PRACH occasions is located in an uplink symbol in time domain, or is located in a full-duplex symbol in time domain, or is located in a flexible symbol in time domain.

In an embodiment, the plurality of PRACH occasions belong to a reference subband in frequency domain, the target subband and the reference subband are non-orthogonal, and the first information block indicates a frequency domain interval between a start frequency domain resource occupied by the plurality of PRACH occasions and a start frequency domain resource included in the reference subband.

In an embodiment, the second PRACH occasion is one of the plurality of PRACH occasions, and the second PRACH occasion is located in a flexible symbol but not in a full-duplex symbol in time domain; when the second PRACH occasion belongs to the target subband in frequency domain, the second PRACH occasion is valid; when the second PRACH occasion does not belong to the target subband in frequency domain, and the second PRACH occasion is not located before a synchronization broadcast signal belonging to a same PRACH slot in time domain, and a start of the second PRACH occasion is at least M symbols behind each of a previous downlink symbol and a previous synchronization broadcast signal, the second PRACH occasion is valid, where M is a non-negative integer related to a subcarrier spacing of a random access preamble.

In an embodiment, a PRACH occasion that is in the plurality of PRACH occasions and that is located in a full-duplex symbol indicated as downlink by a TDD uplink-downlink configuration in time domain, and a PRACH occasion that is located in a symbol other than the full-duplex symbol indicated as downlink by the TDD uplink-downlink configuration are separately mapped to a synchronization broadcast signal.

### Embodiment 13

Embodiment 13 illustrates a structural block diagram of a processing apparatus in a second node device according to an embodiment, as shown in FIG. 13. In FIG. 13, a processing apparatus 1300 in the second node device includes a first transmitter 1301. The first transmitter 1301 includes a transmitter/receiver 416 (including an antenna 460), a transmission processor 415, and a controller/processor 440 in FIG. 4 of this application.

In Embodiment 13, the first transmitter 1301 sends a first information block, where the first information block indicates a plurality of PRACH occasions; and the first transmitter 1301 sends a second information block, where the second information block indicates a target subband and at least one full-duplex symbol. A first PRACH occasion is one of the plurality of PRACH occasions indicated by the first information block, and the first PRACH occasion overlaps in time domain with the at least one full-duplex symbol indicated by the second information block. A synchronization broadcast signal is mapped to a valid PRACH occasion in the plurality of PRACH occasions, and validity of the first PRACH occasion depends on a relationship between the first PRACH occasion and the target subband in frequency domain.

In an embodiment, the validity of the first PRACH occasion further depends on a relationship between a first threshold and an interval length between the first PRACH occasion and an adjacent non-full-duplex symbol in time domain, and the first threshold is configured or predefined and/or related to a user equipment capability.

In an embodiment, the first PRACH occasion belonging to the target subband in frequency domain, and a frequency domain interval between the first PRACH occasion and at least one boundary of the target subband in frequency domain being not less than a second threshold are conditions for the first PRACH occasion to be valid, and the second threshold is predefined or configured.

In an embodiment, any valid PRACH occasion in the plurality of PRACH occasions is located in an uplink symbol in time domain, or is located in a full-duplex symbol in time domain, or is located in a flexible symbol in time domain.

In an embodiment, the plurality of PRACH occasions belong to a reference subband in frequency domain, the target subband and the reference subband are non-orthogonal, and the first information block indicates a frequency domain interval between a start frequency domain resource occupied by the plurality of PRACH occasions and a start frequency domain resource included in the reference subband.

In an embodiment, the second PRACH occasion is one of the plurality of PRACH occasions, and the second PRACH occasion is located in a flexible symbol but not in a full-duplex symbol in time domain; when the second PRACH occasion belongs to the target subband in frequency domain, the second PRACH occasion is valid; when the second PRACH occasion does not belong to the target subband in frequency domain, and the second PRACH occasion is not located before a synchronization broadcast signal belonging to a same PRACH slot in time domain, and a start of the second PRACH occasion is at least M symbols behind each of a previous downlink symbol and a previous synchronization broadcast signal, the second PRACH occasion is valid, where M is a non-negative integer related to a subcarrier spacing of a random access preamble.

In an embodiment, a PRACH occasion that is in the plurality of PRACH occasions and that is located in a full-duplex symbol indicated as downlink by a TDD uplink-downlink configuration in time domain, and a PRACH occasion that is located in a symbol other than the full-duplex symbol indicated as downlink by the TDD uplink-downlink configuration are separately mapped to a synchronization broadcast signal.

A person of ordinary skill in the art may understand that all or some of the steps of the foregoing methods may be completed by a program instructing relevant hardware. The program may be stored in a computer-readable storage medium, such as a read-only memory, a hard disk, or an optical disc. Optionally, all or some of the steps in the foregoing embodiments may alternatively be implemented by using one or more integrated circuits. Correspondingly, the modules and units in the foregoing embodiments may be implemented in a form of hardware, or may be implemented in a form of a software functional module. This application is not limited to any specific form of a combination of software and hardware. The first node device or second node device or UE or terminal in this application includes, but is not limited to, a device such as a mobile phone, a tablet computer, a notebook computer, a USB dongle, a low-power device, an eMTC device, an NB-IoT device, a vehicle-mounted communication device, a flight vehicle, an airplane, a drone, a remote-controlled aircraft, a test apparatus, a test device, or a test instrument. The base station device or base station or network-side device in this application includes, but is not limited to, a device such as a macrocell base station, a microcell base station, a femtocell, a relay base station, an eNB, a gNB, a transmission reception point TRP, a relay satellite, a satellite base station, an aerial base station, a test apparatus, a test device, or a test instrument.

A person skilled in the art should understand that the present invention may be implemented in other specific forms without departing from essential or basic characteristics thereof. Therefore, the currently disclosed embodiments should in any case be considered as illustrative and not restrictive. The scope of the present invention is determined by the appended claims rather than by the foregoing description, and all variations falling within the equivalent meaning and range thereof are considered to be included therein.

## Claims

1. A first node device used for wireless communication, comprising:
a first receiver, configured to receive a first information block, wherein the first information block indicates a plurality of PRACH occasions; and
the first receiver is configured to receive a second information block, wherein the second information block indicates a target subband and at least one full-duplex symbol, wherein
a first PRACH occasion is one of the plurality of PRACH occasions indicated by the first information block, and the first PRACH occasion overlaps in time domain with the at least one full-duplex symbol indicated by the second information block; and a synchronization broadcast signal is mapped to a valid PRACH occasion in the plurality of PRACH occasions, and validity of the first PRACH occasion depends on a relationship between the first PRACH occasion and the target subband in frequency domain.

2. The first node device according to claim 1, wherein the validity of the first PRACH occasion further depends on a relationship between a first threshold and an interval length between the first PRACH occasion and an adjacent non-full-duplex symbol in time domain, and the first threshold is configured or predefined and/or related to a user equipment capability.

3. The first node device according to claim 1 or 2, wherein the first PRACH occasion belonging to the target subband in frequency domain and a frequency domain interval between the first PRACH occasion and at least one boundary of the target subband in frequency domain being not less than a second threshold are conditions for the first PRACH occasion to be valid, and the second threshold is predefined or configured.

4. The first node device according to any one of claims 1 to 3, wherein any valid PRACH occasion in the plurality of PRACH occasions is located in an uplink symbol in time domain, or is located in a full-duplex symbol in time domain, or is located in a flexible symbol in time domain.

5. The first node device according to any one of claims 1 to 4, wherein the plurality of PRACH occasions belong to a reference subband in frequency domain, the target subband and the reference subband are non-orthogonal, and the first information block indicates a frequency domain interval between a start frequency domain resource occupied by the plurality of PRACH occasions and a start frequency domain resource comprised in the reference subband.

6. The first node device according to any one of claims 1 to 5, wherein a second PRACH occasion is one of the plurality of PRACH occasions, and the second PRACH occasion is located in a flexible symbol but not in a full-duplex symbol in time domain; when the second PRACH occasion belongs to the target subband in frequency domain, the second PRACH occasion is valid; when the second PRACH occasion does not belong to the target subband in frequency domain, and the second PRACH occasion is not located before a synchronization broadcast signal belonging to a same PRACH slot in time domain, and a start of the second PRACH occasion is at least M symbols behind each of a previous downlink symbol and a previous synchronization broadcast signal, the second PRACH occasion is valid, wherein M is a non-negative integer related to a subcarrier spacing of a random access preamble.

7. The first node device according to any one of claims 1 to 6, wherein a PRACH occasion that is in the plurality of PRACH occasions and that is located in a full-duplex symbol indicated as downlink by a TDD uplink-downlink configuration in time domain, and a PRACH occasion that is located in a symbol other than the full-duplex symbol indicated as downlink by the TDD uplink-downlink configuration are separately mapped to a synchronization broadcast signal.

8. A second node device used for wireless communication, comprising:
a first transmitter, configured to send a first information block, wherein the first information block indicates a plurality of PRACH occasions; and
the first transmitter is configured to send a second information block, wherein the second information block indicates a target subband and at least one full-duplex symbol, wherein
a first PRACH occasion is one of the plurality of PRACH occasions indicated by the first information block, and the first PRACH occasion overlaps in time domain with the at least one full-duplex symbol indicated by the second information block; and a synchronization broadcast signal is mapped to a valid PRACH occasion in the plurality of PRACH occasions, and validity of the first PRACH occasion depends on a relationship between the first PRACH occasion and the target subband in frequency domain.

9. A method in a first node used for wireless communication, comprising:
receiving a first information block, wherein the first information block indicates a plurality of PRACH occasions; and
receiving a second information block, wherein the second information block indicates a target subband and at least one full-duplex symbol, wherein
a first PRACH occasion is one of the plurality of PRACH occasions indicated by the first information block, and the first PRACH occasion overlaps in time domain with the at least one full-duplex symbol indicated by the second information block; and a synchronization broadcast signal is mapped to a valid PRACH occasion in the plurality of PRACH occasions, and validity of the first PRACH occasion depends on a relationship between the first PRACH occasion and the target subband in frequency domain.

10. A method in a second node used for wireless communication, comprising:
sending a first information block, wherein the first information block indicates a plurality of PRACH occasions; and
sending a second information block, wherein the second information block indicates a target subband and at least one full-duplex symbol, wherein
a first PRACH occasion is one of the plurality of PRACH occasions indicated by the first information block, and the first PRACH occasion overlaps in time domain with the at least one full-duplex symbol indicated by the second information block; and a synchronization broadcast signal is mapped to a valid PRACH occasion in the plurality of PRACH occasions, and validity of the first PRACH occasion depends on a relationship between the first PRACH occasion and the target subband in frequency domain.
